# EUROPEAN PATENT APPLICATION

(11) **EP 3 192 772 A1**
(43) Date of publication of application: **19.07.2017**
(21) Application number: 16151567.1
(22) Date of filing: 15.01.2016
(51) Int. Cl.: C01B 13/32, C01F 7/00, C08K 3/26

(54) **PROCESS FOR THE PREPARATION OF CARBONATE CONTAINING METAL OXIDES-HYDROXIDES BY EMPLOYING METAL ALKOXIDE SOLUTIONS CONTAINING METAL ALKYL CARBONATE GROUPS**

(71) Applicant: BASF SE, 67056 Ludwigshafen am Rhein (DE)
(72) Inventor: Schunk, Stephan A, 69126 Heidelberg-Rohrbach (DE); Lizandara, Carlos, 69123 Heidelberg (DE); Jevtovikj, Ivana, 69115 Heidelberg (DE); Emmert, Timo, 76661 Philippsburg (DE); Lejkowski, Michael, 69151 Neckargemuend (DE); Mueller, Robert, 69226 Nussloch (DE)
(74) Representative: BASF IP Association

(57) **Abstract**

The present invention relates to a metal alkoxide solution comprising metal alkyl carbonate groups. The solution are represented by the general formula M_{X}[OR₁]_{Y}[OOCOR₂]_{Z} in which M_{X} denotes at least one metal from the group M(I)_{A}, M(II)_{B}, M(III)_{C}, M(IV)_{D,} M(V)_{E}, M(VI)_{F}, M(VII)_{G} which means the metals are selected from the group monovalent metal, divalent metal, trivalent metal, metal of higher valency such as tetravalent metal, pentavalent metal, hexavalent metal, heptavalent metal. It is preferred that M_{X} denotes at least one metal from the group M(I)_{A}, M(II)_{B}, M(III)_{C}, M(IV)_{D}, even more preferably Mx denotes at least one metal from the group M(I)_{A}, M(II)_{B}, M(III)_{C}. The term [OOCO] denotes a carbonate group and R₁, R₂ denote alkyl groups with C1 - C60 carbon atoms, more preferably C1 - C20 carbon atoms, with X = A+B+C+D+E+F+G and Y + Z = A+2*B+3*C+4*D+5*E+6*F+7*G, whereby the solution is water free. in case that the metal species only contains a monovalent metal then the solution is formed by metal alkoxide and metal alkyl carbonate whereby the molar amount of metal alkyl carbonate, to molar amount of metal alkoxide ≥ 1 : 1, preferably ≥ 5 : 1, more preferably ≥ 10 : 1, even more preferably ≥ 50 : 1.

## Description

The present invention relates to a process for the preparation of metal alkoxides which are containing metal alkyl carbonate groups and which are present as solutions. The metal alkoxides with the metal alkyl carbonate groups are available as solutions either with an organic solvent or without an organic solvent. The formation of the metal alkyl carbonate groups may lead to a dissolution of the metal alkoxides which are otherwise present as solids under the given physico-chemical conditions. Furthermore, the invention relates to the process for the preparation of the oxides, hydroxides, hydroxycarbonate-, oxycarbonate-, carbonate-based materials and carbonate-based layered double hydroxide materials (carbonate - LDH materials). The process is based in the controlled transformation of the solution of the metal alkoxides containing metal alkyl carbonate groups which are subjected to a controlled hydrolysis. The resulting materials exhibit high surface areas together with a well-defined particle shape whereby the size and shape can be adjusted by the control of the process parameters. Consequently, the resulting materials offer an excellent base material for the preparation of a wide range of new products such as oxidic materials, catalysts, catalyst carriers - or catalyst-intermediates. According to the present invention the process for the preparation of the metal alkoxides containing metal alkyl carbonate groups is achieved by the reaction of metal alkoxides with carbon dioxide which leads to the direct insertion of CO₂ into metal alkoxide bonds, preferably the process is performed under inert gas atmosphere.

The use of CO₂ as chemical Ceria-Zirconia-Mixed Oxide Particles and Process for their Production by Pyrolysis of Dispersions has been described by Walter Caseri in connection with the production of polyalkylencarbonate (see online encyclopedia Römpp from Georg Thieme Verlag KG; reference dated August 2008). It is reported that either diethyl zinc or substances with zinc ethanolate may be used as polymerization catalyst for the production of the polycarbonates. The polymerization process involves the formation of a zinc component as intermediate product which has two side groups whereby one of the side groups appears to consist of a zinc ethyl carbonate group The zinc containing polymerization catalysts is reacted with an epoxide whereby the epoxide is inserted into the bonding between the zinc and the carbonate leading to the formation of mono-substituted zinc alkoxide with an extended chain. The process of CO₂ insertion and epoxide insertion is continued in an alternating manner which leads to the formation of the polycarbonate. The conclusion is that a zinc catalyst had been disclosed which exhibits two functional groups of which one functional group is a ethyl carbonate. With respect to the polymerization process Walter Caseri refers to the book Makromoleküle by Hans-Georg Elias Wiley-VCH (6. Aufl.) Band 3, p. 269 which only discloses the use of diethyl zinc as polymerization catalyst.

The use of LDH materials and/or hydroxide materials which may be loaded with different anionic species have shown high suitability as starting compound for the preparation of oxide materials with a high degree of intermixture of metal species. In general the oxide materials are prepared by a controlled decomposition of the LDH materials and/or hydroxide materials which lead to the formation of oxide materials may be applied as catalysts, as anion exchangers, as carrier in drug delivery systems, as semiconducting materials, magnetic materials, as insulators, as fire retardant materials, and/or components for transistors, solar cells, nanocomposite and/or hybrid materials.

LDHs are an important subclass of metal hydroxycarbonates. LDHs have technological importance in catalysis; optics; medical science and nanocomposite material science (i.e. pigments) and therefore the process for the preparation of LDH materials is a topic of patent publications. For example Choudary et al. have disclosed a process for the preparation of self-assembled nano-binary and ternary oxy/hydroxides in the US-patent US 8,227,046 B2 which had been filed on February 15, 2005. The process leads to the fabrication of LDHs with high surface area and particle size in the range from 1 - 10 nm. The synthesis process is based on the formation of metal alkoxides or acetylactonates which are homogenized by solvent addition and subsequently hydrolyzed by controlled water addition. The resulting mixture is aged and subjected to a supercritical drying process in order to receive the desired LDH materials. The process can be applied to a variety of different bivalent and trivalent metal species.

Layered double hydroxides (LDHs) or hydrotalcite-like compounds are a large family of two-dimensional anionic clay materials with structures generally described with this formula: M(II)₁₋ₓ M(III)ₓ (OH)₂ (An-)_{x/n}. yH₂O, where M(II) and M(III) are divalent and trivalent cations respectively, A the interlayer anion (in the case of being an hydroxycarbonate, A is a carbonate anion), n⁻ the charge on the interlayer anion and x and y the fraction constants. LDHs are composed of brucite-like layers in which a certain fraction of divalent metal cations (i.e. Mg²⁺, Fe²⁺, Co²⁺, Ni²⁺ or Zn²⁺) coordinated by hydroxyl groups in octahedral manor are replaced by trivalent metal cations (i.e. Al³⁺, Cr³⁺, Ga³⁺, In³⁺, Mn³⁺ or Fe³⁺) resulting in positively charged layers. Water, as well as exchangeable inorganic- or organic charge-compensating anions are present in the interlayer. The structural flexibility of the LDHs to incorporate in their lattice a variety of different metals in the brucite layers and suitable anions in the interlayer has increased the interest in these materials. LDHs have been tailored to produce materials designed to fulfil specific requirements for practical applications in a many areas, such as pharmaceutics, photochemistry and electrochemistry including applications as additives in polymers, adsorption materials and precursors for functional materials. In particular LDHs have been widely employed in heterogeneous catalysis as catalysts, catalyst precursors and catalyst supports for various reactions, including variety of organic transformations. Thermal decomposition of the layered double hydroxides by calcination results in the formation of mixed metal oxides (MMOs) with a high thermal stability and a large surface area. In addition, well-dispersed metallic particles are obtained after a reduction treatment. Metal hydroxycarbonates and carbonates can also be prepared by co-precipitation of mixed metal salts with an alkaline carbonate. Metal hydroxycarbonate- and carbonate materials can as well serve as valuable precursors and be calcined to interdispersed high-surface area MMOs. Mixed metal oxides (MMOs) have a wide range of applications in many areas of modern technology, such as catalysis, solar energy conversion processes as well as oil recovery. These materials constitute a very prominent class of materials within the field of heterogeneous catalysis and catalysts due to their acid-base properties, their redox properties as well as their ability to accommodate a wide variety of the different metals in their structure which may lead to very different materials which possess different (catalytic) properties. For example, high surface area metal oxides have an important role in the removal of species such as H₂O, CO₂ and H₂S from feedstocks. Mixed metal oxides play very important role in industrial research, due to their simplicity in handling, decreased reactor and plant corrosion problems, cost effectiveness and because most of the MMOs are reusable and recyclable.

The possibility to tune the interlayer species of these materials and therefore their physical properties was described in several publications which are outlined subsequently. The specific surface area of Mg-Al-LDH compounds can range from about 2 m²/g to more than 300 m²/g depending on the preparation method and the constituents of the LDH.

In general, in the case of small inorganic anions, such as carbonates, the chemical composition of the LDHs does not have a pronounced effect on the obtained specific surface areas according to Juan J. Bravo-Suárez et al. (Microporous and Mesoporous Materials 67 (2004) pages 1-17). The synthesis of LDH materials has been described in the literature using several synthetic approaches. LDHs are usually obtained via the reconstruction method which had been described by P. Nalawade, B. Aware, V.J. Kadam and R.S. Hirlekar (Journal of Scientific & Industrial Research Vol. 68, April 2009, pp. 267-272). The synthesis starts with the calcination of metal salts under inert gas atmosphere. The metal salts are then added to a solution containing decarbonated water with a guest molecule and the pH value is adjusted by NaOH to a pH value in the range from 7-8. The precipitate is aged at room temperature, filtered, washed with decarbonated water thoroughly and dried under vacuum. Additionally to the reconstruction approach, it is worth mentioning the co-precipitation method where metal salts are brought in contact with aqueous solutions containing bases like sodium hydroxide, sodium carbonate or bicarbonate or mixtures thereof (Journal of Scientific & Industrial Research Vol. 68, April 2009, pp. 267-272).
This method has been described in several publications. The method is based on the combination of mixed metal solutions under controlled conditions while keeping the mixture under inert atmosphere. Then, the pH (7-8) is adjusted with NaOH to induce the co-precipitation. The precipitate is aged, filtered, washed with water thoroughly and dried under vacuum.

Another possible route for the synthesis of Mg-Al-LDHs with high surface areas is based on sol-gel chemistry. An example for a sol-gel process is described by Valente et al. in J. Phys. Chem. C, Vol. 111, No. 2, 2007, pages 642 - 651. The process is based on the preparation of a solution of aluminium alkoxide in alcohol. In the present case a series of different experiments was carried out by using ethanol, 2-propanol, or 1-butanol as solvent alcohol. The solvent alcohol was heated up to the boiling point under reflux conditions and then the aluminium alkoxide in the form of aluminium tri-sec-butoxide was added. The aluminium solution was intermixed with a small amount nitric acid (3 molar HNO₃ in water) which functioned as the polymerization agent. Furthermore, acetic acid was added to the solution as complexing agent. Afterwards the magnesium methoxide was added to the solution. The resulting solution was stirred at room temperature for 24 h for equilibration or aging prior to its transformation into a gel. The gel formation was induced by the addition deionized water. The gel was aged for 24 h at room temperature and the aging was followed by drying overnight at 80 °C. Valente et al. reported that they could receive Mg-Al-LDHs materials which had BET surface areas between 290 and 332 m²/g.

A process for the production of LDHs, mixed hydroxycarbonates or hydroxides had been described by Klaus Diblitz et al. in the patent application DE 195 03 522 A1 which had been filed on 03.02.1995 by RWE-DEA (AG). The process opened up the possibility to prepare the materials with high surface areas and with high purities. At the same time it was possible to apply the metal directly as a reactant to the process without the need to use exceptional sources of metal compounds. One of the advantages of the process according to the patent application DE 195 03 522 A1 is that the solvent which is used in the can be recycled and chemical composition of the final materials can be fine-tuned on the molecular scale. The process which is described by Diblitz et al. comprises the formation of metal alkoxides by employing 1-hexanol and the hydrolysis of the metal alkoxides in the presence of water. The emphasis of the experimental examples was given on the preparation of hydrotalcite materials on the base of magnesium and aluminium or zinc and aluminium as metal species. According to the description and the claims of the patent application DE 195 03 522 A1 it was shown that the process could be applied to the preparation of materials which would comprise other metal species. The emphasis of the experimental examples was given on the preparation of hydrotalcite materials on the base of magnesium and aluminium or zinc and aluminium as metal species. According to the description and the claims of the patent application DE 195 03 522 A1 it was shown that the process could be applied to the preparation of materials which would comprise other metal species which are present as divalent or trivalent metals.

One of several objectives which had to be solved by the present invention was to provide a method for preparing high surface area high purity metal oxide materials. The method should be highly flexible with respect to its applicability to a wide range of metal species which are incorporated into the target oxide materials. Another objective was to develop a method which is economically justifiable, energy efficient and environmentally friendly.
Furthermore an objective was to provide a synthesis method which leads to the preparation of oxides, hydroxides, hydroxycarbonate-, oxycarbonate-, carbonate-based materials and carbonate-based layered double hydroxide materials (carbonate - LDH materials) and carbonate-based materials with high surface area and controlled size and nanoparticle shape. At the same time the synthesis process should be flexible in such a way that it allows for the preparation of a wide range of different oxides, hydroxides, hydroxycarbonate-, oxycarbonate-, carbonate-based materials and carbonate-based layered double hydroxide materials (carbonate - LDH materials).

The above mentioned objectives and numerous other objectives are solved by providing a metal alkoxide solution comprising metal alkyl carbonate groups of at least one metal species having the formula M_{X}[OR₁]_{Y}[OOCOR₂]_{Z} in which Mx denotes at least one metal from the group M(I)_{A}, M(II)_{B}, M(III)_{C}, M(IV)_{D,} M(V)_{E}, M(VI)_{F}, M(VII)_{G} which means the metals are selected from the group monovalent metal, divalent metal, trivalent metal, metal of higher valency such as tetravalent metal, pentavalent metal, hexavalent metal, heptavalent metal. It is preferred that Mx denotes at least one metal from the group M(I)_{A}, M(II)_{B}, M(III)_{C}, M(IV)_{D}, even more preferably Mx denotes at least one metal from the group M(I)_{A}, M(II)_{B}, M(III)_{C}. The term [OOCO] denotes a carbonate group and R₁, R₂ denote alkyl groups with C1 - C60 carbon atoms, more preferably alkyl groups with C1 - C20 carbon atoms, with X = A+B+C+D+E+F+G and Y + Z = A+2*B+3*C+4*D+5*E+6*F+7*G, whereby the solution is water free;
in case that the metal species only contains a monovalent metal then the solution is formed by metal alkoxide and metal alkyl carbonate, whereby the molar amount of metal alkyl carbonate to molar amount of metal alkoxide ≥ 1 : 1, preferably ≥ 5 : 1, more preferably ≥ 10 : 1, even more preferably ≥ 50 : 1;
in all other cases the molar amount of metal alkyl carbonate groups Z in comparison to the total molar amount of metal alkyl carbonate groups and alkoxide groups (Y + Z) is in the range from 0.01 - 1, more preferably the molar amount of metal alkyl carbonate groups Z in comparison to the total molar amount of metal alkyl carbonate groups and alkylate groups (Y + Z) is in the range from 0.5 - 0.999, even more preferable the molar amount of metal alkyl carbonate groups Z in comparison to the total molar amount of metal alkyl carbonate groups and alkoxide groups (Y + Z) is in the range from 0.9 - 0.998.

The term alkyl groups refers to hydrocarbons with C1 - C60 carbon atoms whereby the hydrocarbons may have linear, branched or cyclic form. It is also possible that the hydrocarbons have linear, branched or cyclic side groups. For example the cyclic side groups may be selected from the group of cyclopentane, cyclohexane, cycloheptane, or aromatic side groups such as a phenyl group. The hydrocarbons may comprise unsaturated carbon-carbon bonds selected from double bond, alkine bonds, conjugated double bonds. It is conceivable that the alkyl group itself may be formed by an aromatic group [phenyl group] which results in a metal aromatic carbonate or metal phenyl carbonate. This also includes also chemical compounds in which the aromatic ring [phenyl ring] may have side groups. In a preferred embodiment the alkyl group of the metal alkyl carbonate group is not an aromatic group which is in direct bonded to the carbonate group. The alkyl groups are formed out of the alkoxide groups which have the corresponding hydrocarbon groups in the form of the alkoxides, i.e. linear, branched or cyclic. In a preferred embodiment the alkyl group refers to hydrocarbons with C1 - C40 carbon atoms, furthermore it is preferred that the alkyl groups have hydrocarbons with C1 - C20 carbon atoms. The alkyl groups are represented by the characters R₁ and R₂ whereby R₁ and R₂ may be equal or different compounds. Different alkyl groups for R₁ and R₂ may be given in case that the metal alkoxides have different alcohol groups. Not excluding the case that higher metal species may have more than two different alcohol groups or that the alcohol groups of the metal alkoxides may be exchanged with alcohol which is contained in the solvent. Therefore the use of R₁ and R₂ was provided to illustrate the invention in a schematic way. However, the invention shall not be bound to two alkyl groups (for example exceptions is given by an alkoxide with the formula Al[OR₁][OR₂] [OR₃]. It is noted that the term metal alkoxide is synonymous with the term metal alkylate.

In a preferred embodiment the metal alkoxide solutions which comprise the metal alkyl carbonate groups are present as solutions of mixed metals which contain at least two or more different metal species. Furthermore it is preferred that the two or more different metal species have different coordination valencies.

In a preferred embodiment the metal alkoxide solution comprising metal alkyl carbonate groups comprises at least one alcohol from C₁ - C₆₀ alcohol as solvent, preferably at least one alcohol from C₃ - C₂₀ alcohol, more preferably at least one alcohol from C₃ - C₁₂ alcohol. The hydrocarbons which are part of the alcohol may have linear, branched, cyclic form. The presence of a solvent leads to an interaction with the metal alkoxide and the alkoxide groups. The properties of the solvent open up the possibility to control the interactions with the metal alkoxides. Furthermore the dilution of the metal alkoxides provides a tool to control the properties of the mixture and therefore the properties of the process. In a preferred embodiment of the invention the type of alkoxide group and the type of solvent are adjusted in a certain way. In case that the metal alkoxide has a short chain alkoxide from C₁ to C₄ or C₅ alcohol, it is preferred that the solvent comprises a short chain alcohol as well. For the case that the metal alkoxide has a long chain alkoxide from C₆ alcohol and higher as alkoxide group then it is preferred that the solvent comprises a long chain alcohol from the group C₆ alcohol and higher. Furthermore, the homogeneity of the solution is of significance and in case that the solvent comprises a long chain alcohol from C₆ alcohol and higher it may be preferred that the solution comprises a co-solvent.

In another embodiment of the invention the process is carried out in the presence of a non-protic solvent. The solvent should be suited to dissolve the metal alkoxide which is subject of the process of the invention. In certain embodiments it may be preferred that the solvent comprises and non-protic solvent. For example a non-protic solvent is given by dimethyl sulfoxide.

Furthermore it is preferred that the molar amount of metals to the molar amount of solvent is in the range from 0.01 : 1 - 10 : 1, preferably the molar amount of metals to amount of solvent is in the range from 0.2 : 1 - 5 : 1, more preferably the molar amount of metals to molar amount of solvents is in the range from 0.5 : 1 - 1.5 : 1.

The metal alkoxide solution comprising the metal alkyl carbonate groups may also comprises organic polymers, co-solvent and/or stabilizers.

In a preferred embodiment of the invention the metal species which form part of the metal alkoxide solution comprising the metal alkyl carbonate groups, may be selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr, preferably the metal species comprises at least one divalent metal from the group Mg, Ca, Sr, Ba, Zn, Cd, Cu, Ni, Co, Mn, Be, Zr and/or Fe and/or at least one trivalent metal from the group of Al, Ga, In, Fe, Co, Mn, Cr, La, Pr, Ce, Nd, Sm, Gd, Dy, Ho, Er, Yb, Lu, Sc, more preferably the metal species comprises at least one divalent metal from the group Mg, Ca, Sr, Ba, Zn, Cd, Cu, Ni, Co, Mn, Be, Zr and/or Fe and at least one trivalent metal from the group of Al, Ga, In, Fe, Co, Mn, Cr, La, Pr, Ce, Nd, Sm, Gd, Dy, Ho, Er, Yb, Lu, Sc, even more preferably the metal species comprises at least one metal with a valency of four and/or higher than four.

It is also preferred that the metal alkoxide solution comprising the metal alkyl carbonate groups comprises at least one noble metal selected from the group Rh, Ir, Pd, Pt, Ag, Au, preferably the at least one noble metal is selected from the group Pd, Pt, Ag, Au.

Furthermore the solution which is an aspect of the invention comprises at least one noble metal selected from the group Rh, Ir, Pd, Pt, Ag, Au and at least one none noble metal selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr, whereby it is preferred that the molar amount of noble metal to molar amount of none noble metal is in the range from 0.01 : 1 to 10 : 1, preferably the molar amount of noble metal to molar amount of none noble metal is in the range of 0.1 to 1 to 5 : 1, more preferably in the range from 0.5 : 1 to 2 : 1.

The invention relates to a process for the preparation of a metal alkoxide solution comprising metal alkyl carbonate groups. This process involves the following step:
a) preparation of a metal alkoxide solution which is free of water whereby the metal alkoxide comprises at least one metal alkoxide having the formula M_{X}[OR₁]_{Y} in which Mx denotes at least one metal M(I)_{A}, M(II)_{B}, M(III)_{C}, M(IV)_{D}, M(V)_{E}, M(VI)_{F}, M(VII)_{G} selected from the group monovalent metal, divalent metal, trivalent metal, metal of higher valency such as tetravalent metal, pentavalent metal, hexavalent metal, heptavalent metal, preferably M_{X} denotes at least one metal from the group M(I)_{A}, M(II)_{B}, M(III)_{C}, M(IV)_{D}, even more preferably Mx denotes at least one metal from the group M(I)_{A}, M(II)_{B}, M(III)_{C}, and R₁ denotes an alkyl group with C1 - C60 carbon atoms, preferably an alkyl group with C1 - C20 carbon atoms, with X = A+B+C+D+E+F+G and Y = A+2*B+3*C+4*D+5*E+6*F+7*G,
b) contacting the metal alkoxide solution with CO₂ whereby the contacting involves thorough mixing of the solution in the presence of CO₂ for a defined period of time at a defined temperature.

The step b) is performed in such a way that at least a part of the metal alkoxide groups are converted into the metal alkyl carbonate groups. Preferably, the molar amount of alkoxide groups that is converted into metal alkyl carbonate groups is ≥ 10 %, preferably the molar amount of alkoxide groups converted into metal alkyl carbonate groups is ≥ 50 %, more preferably the molar amount of alkoxide groups converted into metal alkyl carbonate groups is ≥ 90 %.

By conducting the process it is preferred that the step b) takes place at a temperature in the range from 0 - 100 °C, preferably at a temperature in the range from 10 - 80 °C, more preferably at a temperature in the range from 25 - 80 °C and /or the time period for the conversion metal alkoxide is ≥ 1 min, preferably ≥ 10 min, more preferably ≥ 100 minutes.

It is not excluded here that the temperature conditions may be outside the given range. However, it is considered as essential that the resulting product which has inserted a major part of the CO₂ molecules is present in the form of a solution. It is pointed out that an aspect of the invention relates to a process for the preparation of oxide materials which are based on the use of metal alkoxide solution which contain metal alkyl carbonate groups. The metal alkyl carbonates are formed by the reaction of metal alkoxides with CO₂ molecules. In a pictorial representation the binding with CO₂ is described as insertion of CO₂ into the bond between the metal and the alkoxide group. The finding is that the insertion appears to be reversible and the reaction conditions are adjusted in such a way that a significant amount CO₂ is inserted and that the resulting solution is process in this stage with the CO₂ being available in the form of carbonate species.

The conditions of contacting the metal alkoxide with the CO₂ should fulfill the requirements that the CO₂ can be taken up in an efficient way. This means that the solution should be stirred or mixed thoroughly while the CO₂ is delivered to the solution. Mixing can be performed by any means which are known to the person who is skilled in the art. The reaction rate of the CO₂ insertion will be determined on the various physico-chemical synthesis parameters which are of impact and an improved mixing efficiency can help to decrease the time of the formation of the metal alkyl carbonate groups. The process may be performed under given conditions which may be in the range from the freezing point to corresponding boiling point of the corresponding solution.

Preferably, the CO₂ is delivered in the form of a gas. However, this does not exclude the addition of CO₂ in the solid form.

It is pointed out the process which is shown in the experimental part of the present description refers to the implementation of the process under pressure conditions which are slightly above the atmospheric pressure due to the supply of gaseous carbon dioxide to the synthesis vessel. However, this does not limit the pressure range in which the process of the invention may be carried out. It is expected that the process of the preparation of the metal solution may be carried out at a wide range of different pressures. Furthermore, the process may be carried out under static conditions in a batch reactor system or under continuous conditions in a flow reactor system.

In a preferred embodiment of the process the metal alkoxide comprises a metal which is selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr, preferably the metal alkoxide comprises at least one divalent metal from the group Mg, Ca, Sr, Ba, Zn, Cd, Cu, Ni, Co, Mn, Be, Zr and/or Fe and/or at least one trivalent metal from the group of Al, Ga, In, Fe, Co, Mn, Cr, La, Pr, Ce, Nd, Sm, Gd, Dy, Ho, Er, Yb, Lu, Sc, more preferably the metal alkoxide comprises at least one divalent metal from the group Mg, Ca, Sr, Ba, Zn, Cd, Cu, Ni, Co, Mn, Be, Zr and/or Fe and at least one trivalent metal from the group of Al, Ga, In, Fe, Co, Mn, Cr, La, Pr, Ce, Nd, Sm, Gd, Dy, Ho, Er, Yb, Lu, Sc, even more preferably the metal alkoxide comprises at least one metal with a valency of four and/or higher than four.

The process is also characterized by a preferred stoichiometric composition of the educt compound whereby it is preferred that the molar amount of metals to the molar amount of solvent is in the range from 0.01 : 1 - 10 : 1, preferably the molar amount of metals to amount of solvent is in the range from 0.2 : 1 - 5 : 1, more preferably the molar amount of metals to molar amount of solvents is in the range from 0.5 : 1 - 1.5 : 1.

It is preferred to perform the process in connection with a solution that comprises at least one noble metal selected from the group Rh, Ir, Pd, Pt, Ag, Au, preferably the at least one noble metal is selected from the group Pd, Pt, Ag, Au. The advantage of the use of noble metals relates to the outstanding efficiency of the process to distribute the metal species and consequently also to distribute the noble species within the oxide material which can be produced according to the present invention.

In a preferred embodiment the process comprises at least one noble metal selected from the group Rh, Ir, Pd, Pt, Ag, Au and at least one none noble metal selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr, whereby it is preferred that the molar amount of noble metal to molar amount of none noble metal is in the range from 0.01 : 1 to 10 : 1, preferably the molar amount of noble metal to molar amount of none noble metal is in the range of 0.1 to 1 to 5 : 1, more preferably in the range from 0.5 : 1 to 2 : 1.

Process for the preparation of oxides, oxide-hydroxides, hydroxides, hydroxy-carbonates, oxyhydroxy-carbonates, oxy-carbonates, carbonate-based materials and/or carbonate-based layered double hydroxide materials whereby a metal alkoxide solution which comprises metal alkyl carbonate groups according to the present description is subjected to a hydrolysis step in which the solution is contacted with water or an aqueous liquid whereby the molar amount of water which is added to the molar amount of metals in the metal species containing solution is in the range from 0.01 : 1 to 2000 : 1, more preferably the molar amount of water which is added to the molar amount of metals in the metal containing solution is in the range from 0.1 : 1 to 1000 : 1, even more preferably the molar amount of water which is added to the molar amount of metals in the metal containing solution is in the range from 0.2 : 1 to 600 : 1.

The contacting with water or an aqueous liquid may result in the formation of a two phase system. In a preferred embodiment of the invention the formation of a two phase system is suppressed in such a way that the solvents are adjusted by the addition of co-solvents that the resulting metal solution forms a homogeneous solution. In case that the alcohol comprises a C₆ alcohol or higher alcohol as solvent the preferred co-solvent may consist of methanol and / or ethanol, more preferably methanol is employed as co-solvent in combination with a process that uses higher alcohol of comprising C₆ alcohol or higher alcohols.

The oxides, oxide-hydroxides, hydroxides, hydroxycarbonates, oxyhydroxy-carbonates, oxy-carbonates, carbonate-based materials and/or carbonate-based layered double hydroxide materials which are prepared according to the process of the invention are characterized by a high surface area and small particle size. The calcined materials exhibit a BET-surface area which is ≥ 10 m²/g preferably the BET-surface area is ≥ 50 m²/g, more preferably the BET-surface area is ≥ 100 m²/g and/or the average particle size is < 1000 nm, preferably the average particle size is < 100 nm. The BET surface area is determined by N₂ adsorption measurement. The average particle size may be determined either by scanning electron microscope (SEM), transmission electron microscope (TEM) or X-ray diffraction (XRD).

The invention relates to a process for the preparation of metal alkoxides containing metal alkyl carbonate groups. The metal alkoxides containing the alkyl carbonate groups are present as metal solutions under physico-chemical standard conditions. It was found out that the solutions have excellent properties to serve as base materials for the preparation of hydrolysis products and for the formation of metal oxide precipitates. The metal solutions may be used as single source precursors for preparation carbonate containing materials and catalyst intermediates in the formation of organic carbonates and / or metal oxide carbonates.

The insertion of the carbon dioxide into the bond between metal alkoxide and the formation of metal alkyl carbonate could lead to the liquification or solubilisation of the metal alkoxide of several metal alkoxide which were present as solid powders. The process of the invention is connected to the use of carbon dioxide and the transformation of the solid products into base materials which are liquid and which exhibit an improvement in their processability over the metal alkoxide which were used as starting materials.

Another aspect of the invention was the finding that the metal solutions can be used as metal source in process for the impregnation of solid support materials. It was unexpected that the use of the metal alkoxide solution with the metal alkyl carbonate groups affects the dispersion with respect to increase in dispersion and/or improvement in the deposition of the metal species. Furthermore, it is assumed that the metal solutions may have properties which may be of interest in the field of homogeneous catalysis.

Furthermore, the present invention relates to a process for the preparation of metal oxides, hydroxides, hydroxycarbonate-, oxycarbonate-, carbonate-based materials and carbonate-based layered double hydroxide materials (carbonate - LDH materials) which comprises the hydrolysis and condensation of at least one metal alkoxide containing metal alkyl carbonate groups in the presence of mono-, di- and/or trivalent alcohol(s) and/or glycol ethers from the group of C₁ - C₆₀ alcohol, more preferably C₃ - C₂₀ alcohol, even more preferably C₃ - C₁₂ alcohol and the metals of the metal alkoxide comprises a divalent metal cation, trivalent metal cation and/or metal cations of higher valency whereby the process is characterized in that:
The solution which is obtained in step b) may be subjected to the following process step:
   c') the solution of step b) is subjected to i) washing treatment and drying process, ii) washing treatment and re-dispersion and / or iii) drying process.

Furthermore, the present invention relates to a process for the preparation of metal, metal oxides, hydroxides, hydroxycarbonate-, oxycarbonate-, carbonate-based supported materials which comprises the impregnation of the solution of metal alkoxide containing metal alkyl carbonate groups onto a support whereby the process is characterized in that:
Another embodiment of the invention relates to the use of the metal solution as metal source for the deposition of metal species on the surface of carrier materials. The use comprises the following steps of:
   a") preparing a water-free solution comprising alcohol and metal alkoxides containing metal alkyl carbonate groups ,
   b") contacting the solution of step a") with a support which comprises a material selected from the group metal, metal-oxide, -hydroxide, -hydroxycarbonate, -oxycarbonate, -carbonate-based material,
   c") thermal treatment of the material which has been obtained by the steps a') and b").
Surprisingly, it was found the metal solution which contains the metal alkyl groups is a highly effective impregnating agent when it is used in order to load metal species onto support materials. Corresponding catalytic data showed that the impregnated carrier materials which were treated with the metal solution comprising metal alkyl groups showed an enhancement in the catalytic performance which appeared to be not foreseeable.

Furthermore, the synthetic approach for the synthesis of the materials allows the recyclability of the used solvents, as well as in the RWE-DEA patent, DE 195 03 522 A1, but with the advantage that allow the growth of carbonate-based layered double hydroxide materials (carbonate - LDH materials) with high surface areas without the need to exchange the anion at fixed x (M(II)1-x M(III)x (OH)₂ (An-)x/n . yH₂O), and well-defined materials, which can contain oxide, hydroxide anions and/or inorganic anions in particular carbonate-, oxycarbonate- or hydroxycarbonate anions.

According to the process of the invention the hydrolysis and condensation of metal alkoxide precursors, containing metal alkyl carbonate groups, in a solution or system of 1-hexanol/methanol/water has been found as to be very favorable for the preparation of the oxides, hydroxides, hydroxycarbonate-, oxycarbonate-, carbonate-based materials and carbonate-based layered double hydroxide materials (carbonate - LDH materials) materials with sizes below 500 nm, isotropic and anisotropic morphology, surface areas >100 m²/g and synthetically achievable variety of different compositions.

The process relates to a better adjustment of the polarity of the metal solution in comparison to the metal alkoxide species. The insertion of the carbon dioxide into the bonds of the metal alkoxides appeared to lead to modification of the polarity of the metal solutions in such a way that the metal solutions appear to offer improved properties and new applications. An advantage which is given by the process according to the invention is related to the change in the solubility properties of the resulting metal solution which can be employed in the precipitation process under highly controlled conditions resulting in an improved regulation of the hydrolysis process. In connection with the improved regulation of the hydrolysis process it appears to be possible to fine tune the structural properties with respect to the primary particle size of the oxidic powder materials as well as the surface areas.

In connection with heterometallic alkoxides or mixed metal alkoxide this modification is accompanied by a synergistic effect which is given by an improvement in mixing properties. The different metals species which are present in the metal solutions can be dissolved on a more homogeneous level in comparison to the metal solutions of the metal alkoxide. This may be an explanation why the metal solutions are improved when using them as metal source for impregnation solution leads. Adjustment of the polarity of the metal solution is given. Decrease in the interaction forces between the metal species over the metal alkoxides. Consequently the metal solution can be applied in higher concentration which leads to a reduction in the consumption of solvents. Furthermore, it was found that the impregnated solid catalysts showed better catalytic results over the corresponding catalysts which had been prepared on the base of metal alkoxide. Without being bound to a theory it may be assumed that the insertion of the carbon dioxide changes the polarity of the metal alkoxide and leads to a reduction of interaction forces which may be caused by the M-O-M bridging tendency of the alkoxides and therefore allow to improve the solubilization of the metal alkoxides. Based on this effect the degree of carbon dioxide insertion appears to be of relevant factor with respect to the properties of the resulting metal solution. The upper limit of the carbon dioxide uptake occurs in case that all metal alkoxide bonds have taken up a carbon dioxide molecule. However, the insertion appears to form an equilibrium state which is influenced by the carbon dioxide content which is present in the atmosphere. The experiments had been performed in glass flasks. An observation was also that a certain amount of the inserted carbon dioxide appeared to be broken off from the metal solution when the atmosphere above the solution was switched to an inert atmosphere which was free of carbon dioxide. The release of the carbon dioxide was not spontaneous but over a certain period of time and the speed of the carbon dioxide release appeared to depend on the thermodynamic parameters which were given by temperature and pressure control.

The products of the hydrolysis form precipitates which incorporate the carbonate species within the oxide-hydroxide on an atomic level. The treatment after the hydrolysis is adjusted in such a way that the carbonate species which is incorporated in the precipitate may remain to a significant higher degree in comparison to the materials which are obtained by the hydrolysis according to the method of Klaus Diblitz et al. which had been disclosed in the patent application DE 195 03 522 A1. Therefore, the process opens up a new way to access oxide-hydroxides with carbonate being incorporated on a molecular level.

The process of the invention is characterized by its outstanding versatility with respect to the metal species that can be employed as starting metal alkoxides. The incorporation of carbonate species in the structure of the oxidic materials could be considerable improved over the process of the state of the art which is for example the precipitation process the presence of dissolved carbonate salt. In case of the process according to the invention the carbonate species are distributed in a most uniform way in the direct proximity of the metal species which are subject to the process. The process according to the present invention opens up an access to well-defined carbonate containing oxide materials. The carbonate content and the hydroxyl group density may be adjusted by thermal treatment and / or chemical treatment of the oxidic products.

Furthermore, it should be pointed out that the process of the invention appears to exclude detrimental effects which may appear in other synthesis systems which contain complexing agents or which contain chemicals which act as complexing agents. Such detrimental effects may occur in case that the precipitation process is carried out in the presence of ammonium carbonate species which can complex certain metal species resulting in a chemical distortion of the incorporation of metal species or inhibiting the metal species from being incorporated into the oxide structure. Such effects may be intensified in case that very valuable noble metals are subject-matter of the synthesis system due to the fact that the recovery of the noble metal may be reduced by the complexing effect which may occur according to the state of the art synthesis systems.

"Heterometallic alkoxides" are single-source precursors for oxides, hydroxides, hydroxycarbonate-, oxycarbonate-, carbonate-based materials and carbonate-based layered double hydroxide materials (carbonate - LDH materials) in which different metals are associated within a same molecule are accessible by a variety of strategies. Heterometallic alkoxides comprise divalent metal cation, trivalent metal cation, and/or metal cations of higher valency (i.e. more than trivalent). The simplest approach to mixed metal alkoxides is based on the mixing of precursors of different metals, namely metal alkoxides M(OR)ₙ or metal alkoxides associated to other oxide precursors such as carboxylates, ß-diketonates, or to halides or alkyl derivatives for systems destined to catalytic applications. Mixed-metal functional alkoxides have also been prepared by alcohol exchange reactions applied to metal species supported by usual alkoxy ligands (-OR). Retention of the stoichiometry has generally been assumed although as evidence for this of isolation and full characterization is necessary. For synthesis of transition metal alkoxides, the metathesis reaction of water free metal halides (e.g. chlorides) with alkoxides of group I elements is commonly used, i.e. Li(OR). The synthesis is usually carried out in the parent alcohol; the choice of the alcohol depends on the desired alkoxo-group residing with the alkoxide and includes mono-, di- and/or trivalent alcohol(s) and/or glycol ethers.

"LDH materials and/or hydroxide materials with or without carbonate species and metal hydroxycarbonates and carbonates" have been rationally designed by well-developed methodologies, based on the ability to tune of the metal cations in the layers and as well as possibility to exchange of the anions in the interlayers. The incorporation of the transition metals in the metal alkoxides as precursors for LDH materials and/or hydroxide materials with or without carbonate species and metal hydroxycarbonates and carbonates, allows access to a variety of highly dispersed mixed metal oxide (MMOs) catalysts that can be obtained with a selected post-synthesis treatment, such as calcination and reduction.

"Mixed metal oxides" (MMOs) are oxygen-containing combinations of two or more metallic ions in proportions that may either vary or be defined by a strict stoichiometry. There are various methods for preparation of MMOs, such as sol-gel, wet impregnation, hydrothermal method, co-precipitation and microwave irradiation. MMOs catalysts are much more active than each of the components and that the activity is enhanced if great homogeneity of the oxides is achieved. Materials which satisfy such requirements are preferably derived by thermal decomposition of precursors containing all the metal cations in the same phase, such as heterometallic alkoxides.

The term "water free solution" or water free is given in respect to the sum of the molar amount of the metal alkoxides and the molar amount of the solvent molecules. The metal alkoxides and the solvent molecules also including the co-sovent molecules form the base molecules of the solution. Therefore the term water-free solution shall mean that the water content is less than 10 ‰ with respect to the molar amount of base molecules. Preferably the water content is less than 1 ‰ with respect to the amount of base molecules, more preferably the water content is less than 0.1 ‰ with respect to the amount of base molecules. Even more preferably the water content is less than 0.01 ‰. The sign ‰ indicates per mill (or also in use per thousand). Process steps are taken to eliminate the intrusion of water during the synthesis process. Furthermore, the educts are dried prior to their application in the process according to the invention. These procedures are designed for a) dehydration or remove residues of water from the solvent (i.e. alcohol) until the water impurity is reduced to the required level of water free conditions (i.e. by distillation and/or use of drying agents such as molecular sieves, CaCl₂, CaSO₄, MgSO₄, Na₂SO₄, P₂O₅) and b) prevent the components from further reacting with moisture from air (i.e. by preparing necessary reaction steps in a glove-box and/or by applying Schlenk-techniques).

The term "washing process" as used within the present disclosure shall mean an operation performed in order to remove undesired compounds like the remaining high boiling alcohol in the final product (primary, secondary and/or tertiary C₆-C₆₀ alcohols) at the surface of the precipitated particles. The high boiling alcohol is firstly exchanged by one or more low-boiling solvent. This low-boiling solvent has to accomplish two functions, be soluble in the high boiling alcohol and water. Afterwards, the low-boiling alcohol can be exchanged with water, before to proceed to the drying process. The low-boiling solvents can be such as acetone, methanol, ethanol, n-propanol and/or isopropanol.

The term "drying process" within the meaning present disclosure shall be any operation which is performed to remove the rest of the solvent and/or water present in the product of the precipitated particles, after the washing process has been finished. There are several methods for the removal of the solvent known to those skilled in the art. Examples of typical drying processes are: freeze drying, spray drying, drying in static or convection ovens, drying on band calciner and other procedures used to remove residual solvent from a precipitate. The procedures include explicitly the use of elevated temperatures, reduced pressures, controlled atmosphere (which can be varied) or other means to control the final quality of the dried product.

The thermal treatment may include includes a heating of the material in the temperature range from 25 °C to 1500 °C. Preferably, the material is treated by a thermal treatment at a temperature in the range from 50 °C - 1000 °C. Thermal treatment of the material at a temperature at 100 °C or above may be considered as calcination treatment. It is preferred that the calcination is performed at a temperature in the range from 100 - 900 °C, more preferably the temperature is in the range from 200 - 600 °C, even more preferably the temperature is in the range from 250-450 °C.

The term "co-solvent shall" mean a solvent which allows miscibility between two solvents which are not miscible.

In the present disclosure the term "low boiling alcohol" shall mean any alcoholic compound having 1 to 5 carbons, generally described as C₁ - C₅ alcohol, including primary-, secondary-, tertiary-, unsaturated- and cyclic alcohols.

The term "high boiling alcohol" refers to any alcohol compound which has 6 to 60 carbon atoms, generally described as C₆ - C₆₀ alcohol, including primary, secondary, tertiary, unsaturated and cyclic alcohols.

### Continuous reaction process

The process of the present invention may be used in a continuous reaction process whereby the continuous operation may be favorable to improve the process control with respect to mixing and diffusion.

### Use of higher pressure conditions

All examples which are given in connection with the present invention were carried out under atmospheric pressure. However, it may not be excluded to conduct the process under higher pressure. The term higher pressure refers to a pressure which exceeds atmospheric pressure by several bars (e.g. the term higher pressure specifies a pressure of 5 bar, 100 bar or 300 bar). The combination of the process of the invention with high pressure methods can result in a shift of the temperature ranges which are given as favorable in connection with the process of the present invention, especially the boiling points of the solvents used. However, it has to be taken into account that the operation of the process under higher pressure conditions may be less favorable due to the fact that operational costs a significantly increased over a process which is operated under atmospheric pressure or a pressure which is close to atmospheric pressure. Therefore autogenous pressure build-up by the solvent in an autoclave system may in some cases be a handy solution with technical and economic advantages.

The materials (i.e. oxides, hydroxides, hydroxycarbonate-, oxycarbonate-, carbonate-based materials and carbonate-based layered double hydroxide materials (carbonate - LDH materials)) which are prepared by the process of the present disclosure may be used in different application areas. These application areas are in the field of tailored catalyst supports, drug carriers, admixtures for drilling liquids within oil and fracking.

### Experimental description

In order to illustrate the present invention in more detail a series samples had been prepared according to the invention (see Examples 2, 5, 6, 8 - 13, and Examples 15, 16). For comparison reasons a set of comparison samples had been prepared according to the process which is subject matter of the EP patent application EP 14199465.7 relating to a process for the preparation of double layered hydroxides, oxide-hydroxides which had been filed on 19.12.2014 by the same applicant (i.e. BASF SE). The examples which illustrate the invention were marked as inventive examples (abbreviated by IE or I). The comparison examples were abbreviated by the letters CE. The organic solvents which were employed in the preparation process were used in the dried form, which means that the solvents were free of water according to the present disclosure. Furthermore, the gases (i.e. the CO₂ and inert gas) which were used for within the process were water free. A summary of all different examples is shown in Table 1 and the details of the preparation process and the characterization are described hereafter:

### Example 1 (metal hexanolate) - (Mg₆Al₂(O-Hex)₁₈)

12.43 g magnesium ethanolate and 7.40 g aluminium isopropoxide were filled into a reaction vessel (having a capacity of 500 mL) which was put under an inert gas atmosphere. Afterwards 18.4 mL dry 1-hexanol were added to the metal salts. In order to convert the metal salt in the form of metal hexanolates, the alcohol groups of the metal alkoxides were exchanged and the lower boiling alcohols were successively removed by distillation. The ethanol was distilled off at a temperature of 80 °C and the isopropanol was distilled off at a temperature of 84 °C. The yield of metal hexanolate was 98 wt.-% (percent by weight) of the theoretical yield.

### Example 2 (IE1) - (Mg₆Al₂(OOCO-Hex)₁₈)

12.43 g magnesium ethanolate and 7.40 g aluminium isopropoxide were filled into a 500 mL reaction vessel which was put under inert gas atmosphere. 18.4 mL dry 1-hexanol were added to the metal salts. The metal salts were converted into the metal hexanolate by exchanging the alcohol groups and removal of the low boiling alcohols via distillation whereby ethanol was distilled off at 80 °C and isopropanol distilled off at 84 °C. In a subsequent step the metal hexanolate was converted into the metal hexyl carbonate solution by contacting the solution with CO₂. The CO₂ delivered to the solution by bubbling gaseous CO₂ into the solution for a time period of one hour while the solution was heated at 80 °C. The CO₂ was passed into the solution with a tube which had been equipped with a jet nuzzle. The flow rate of the CO₂ supply was 2000 mL per minute. The yield of the resulting solution containing metal hexyl carbonate was 98 percent by weight of the theoretical yield.

### Example 3 (comparative example CE1) - (Mg₆Al₂(OH)₁₈.4 H₂O)

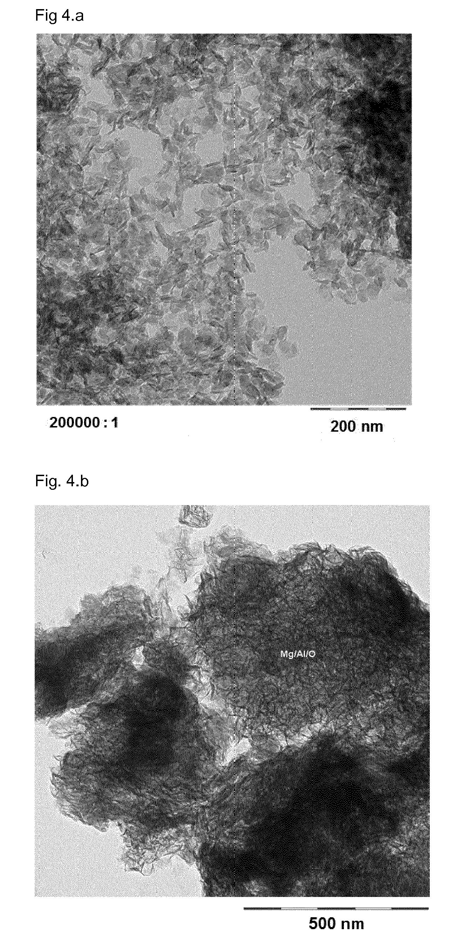

12.43 g magnesium ethanolate and 7.40 g aluminium isopropoxide were filled into a 500 mL reaction vessel which was put under inert gas atmosphere. An amount of 66 mL 1-hexanol was added. The metal salts were converted into the metal hexanolate by exchanging the alcohol groups and removal of the low boiling alcohols via distillation. The ethanol was distilled off at 80 °C and the isopropanol was distilled off at 84 °C. The resulting metal hexanolate solution was heated at 80 °C for 1 h under stirring. Then 65 mL methanol were added to the metal hexanolate solution. In order to trigger the hydrolysis and subsequently to the addition of the methanol, 31 mL of an aqueous solution of ammonium carbonate was added to the metal hexanolate solution under vigorous stirring. The aqueous contained 3.48 g (NH₄)₂CO₃ which had been dissolved therein. The temperature of the hexanolate solution was kept at 80 °C while adding the methanol and the aqueous carbonate solution. After the addition of the aqueous carbonate solution The heating of the mixture (at 80 °C) as well as stirring of the mixture was continued for 5 hours after the ammonium carbonate had been added in order to equilibrate and to age the precipitate. Afterwards the precipitate was filtered off and subjected to a washing process which consisted in a first washing step with acetone and a second washing step with water. In the next step the precipitated was given into a drying oven for 12 hours at 80 °C. The yield of dried product (i.e. carbonated oxide hydroxide) corresponded to 98 wt.-% (percent by weight) of the theoretical yield. The sample was characterized with Transmission electron Microscopy (Fig. 4a) and anisotropic particles with sizes below 100 nm were observed.

### Example 4 (12) - (Mg₆Al₂(CO₃)(OH)₁₆.4 H₂O)

12.43 g magnesium ethanolate and 7.40 g aluminium isopropoxide were filled into a 500 mL reaction vessel which was put under inert gas atmosphere. 18.4 mL dry 1-hexanol were added to the metal salts. The metal salts were converted into the metal hexanolate by exchanging the alcohol groups and removal of the low boiling alcohols via distillation whereby ethanol was distilled off at 80 °C and isopropanol distilled off at 84 °C. In a subsequent step the metal hexanolate was converted into the metal hexyl carbonate solution by contacting the solution with CO₂. The CO₂ delivered to the solution by bubbling gaseous CO₂ into the solution for a time period of one hour while the solution was heated at 80 °C. The CO₂ was passed into the solution with a tube which had been equipped with a jet nuzzle. The flow rate of the CO₂ supply was 1000 mL per minute. The yield of the resulting solution containing metal hexyl carbonate was 98% of the theoretical yield.

Then the metal carbonate hexanolate solution was heated at 80 °C for 1 h under agitation. In the next step 65 mL of methanol were added to the solution. This step was followed by the hydrolysis step which was done by the addition of 31 ml H₂O under vigorous stirring. The stirring of the mixture was continued for a period of 5 h. The resulting precipitate was separated from the liquid by filtration and subjected to a washing process. Washing included washing treatment with acetone and washing treatment with water. The washed precipitated was dried for 12 hours at 80 °C within a drying oven. The yield of dried product was 98 wt.-% (percent by weight) of the theoretical yield. The sample was characterized with Transmission Electron Microscopy and anisotropic particles with sizes below 100 nm were observed (Fig. 4b).

### Example 5 (13) - (Mg₆Al₂(¹³CO₃)(OH)₁₆. 4*H₂O)

12.43 g magnesium ethanolate and 7.40 g aluminium isopropoxide were filled into a 500 mL reaction vessel which was put under inert gas atmosphere. Then, 18.4 mL dry 1-hexanol were added. The metal salts were converted into a solution of metal hexanolate in hexanol. Therefore the mixture was heated to 80 °C and the ethanol was distilled off and afterwards mixture was heated to 84 °C isopropanol was distilled off.

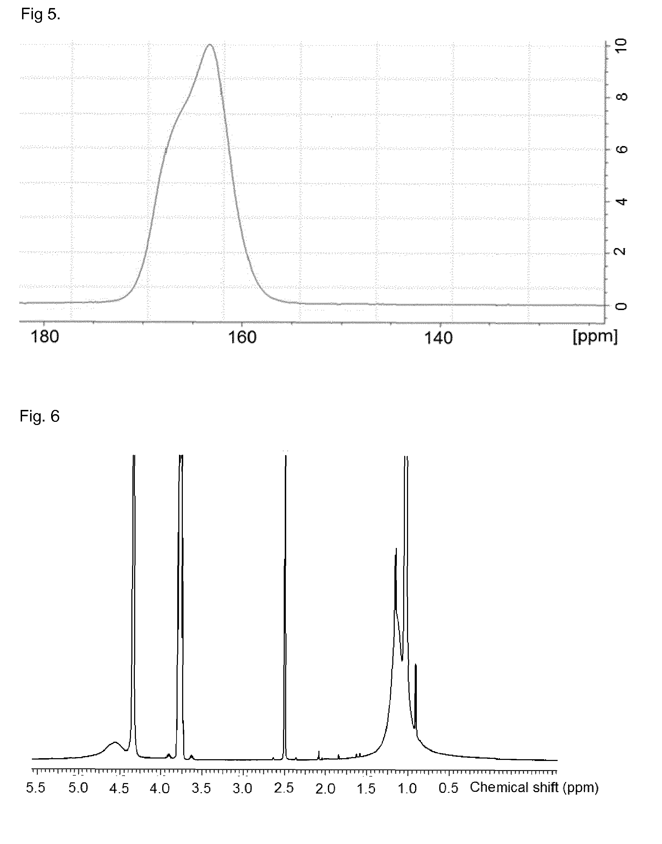

To form the metal hexyl carbonate the resulting solution of metal hexanolate in hexanol was contacted with CO₂ which was passed into the solution for a time period of 4 hours while the solution was hated at 80 °C. The CO₂ which was used contained ¹³C labelled carbon atoms. Then, 65 ml methanol were added to the solution. The hydrolysis was triggered by adding 31 mL H₂O to the solution while the solution was heated at 80 °C and stirred. The heating and stirring of the solution was performed for a period of 5 h after the water had been added. The precipitate which had been formed was filtered off and subsequently washed with acetone. The solid product was dried at 80 °C for 12 h. The solid material was characterized by a ¹³C MAS NMR measurement which is shown in Figure 5. In the ¹³C MAS NMR spectrum the characteristic chemical shift for carbonates can be observed: ¹³C MAS NMR: δ 163.3-166.7 (m, CO₃). One main signal for the carbonate groups can be distinguished, which confirms the presence of the carbonate anion in the interlayer. On the broadening of the carbonate signal, a "knee" of a second signal could be observed that is attributed to the carbonate groups on the surface of the material.

### Example 6 (14) - (MgAl₂(OO¹³CO-iPr)₈)

3 g of MgAl₂(O-iPr)₈ were placed in a 100 ml Schlenk-tube which was put under inert gas atmosphere. The MgAl₂(O-iPr)₈ was from Alfa Aesar. 20 mL dry d₆-DMSO was added. The mixed metal alkoxides were converted into the corresponding metal alkyl carbonate of the mixed metals. To perform the conversion the solution was contacted with CO₂ gas whereby the CO₂ was passed into the solution for a time period of 4 hours while the solution was heated at 80 °C. The CO₂ which was employed here for the contacting step was labeled with ¹³C carbon atoms.

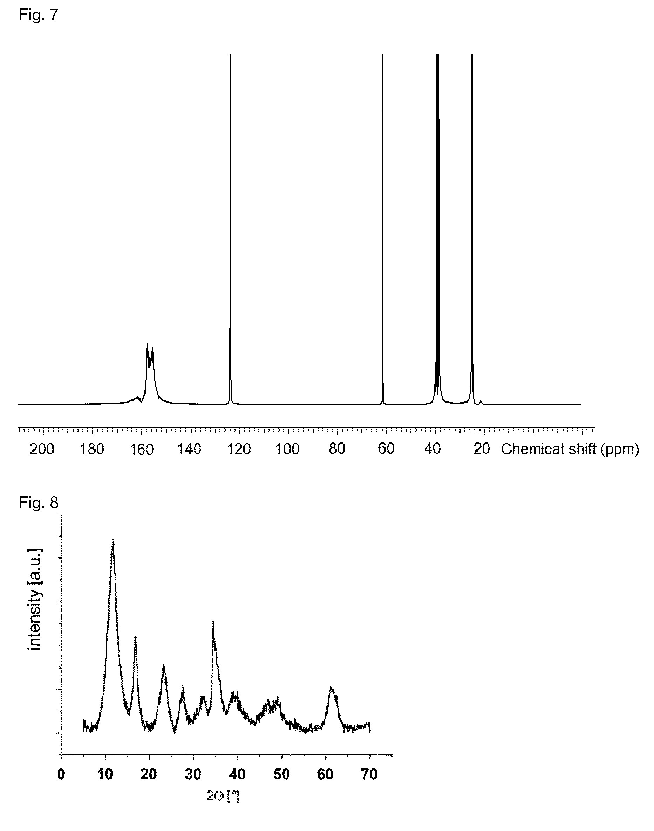

The resulting metal alkyl carbonate solution was characterized by for ¹H and ¹³C NMR measurements which are shown in Figures 6 and 7.
The ¹H NMR spectrum shows shifting of the -CH- proton on the secondary carbon atom of the isopropyl group, due to the presence of carbonate (CO₃): ¹H NMR (500 Hz, d₆-DMSO): δ 4.56 (br. s, OCOOCH(CH₃)₂) ppm; In the ¹³C NMR spectrum the characteristic chemical shift for carbonates were identified : ¹³C NMR (500 Hz, d₆-DMSO): δ 156.4 (s, CO₃), 158.5 (s, CO₃) ppm. Two signals for the carbonate characteristic chemical shift confirm the presence of two different carbonate groups, due to the different environment of the groups have in the molecule. This confirms that CO₂ has been inserted in both Al- and Mg- metal-oxygen bonds, resulting with separate signals in the ¹³C NMR spectrum.

### Example 7 (comparative example CE3) - (Mg₆Al₂(¹³CO₃)(OH)₁₆. 4*H₂O)

12.43 g magnesium ethanolate and 7.40 g aluminium isopropoxide were put under inert gas atmosphere in a 500 mL reaction vessel. Then, 18.4 mL dry 1-hexanol were added. The mixture was heated up to 80 °C in order to distill off ethanol and afterwards heated at 84 °C in order to distill off isopropanol. The process led to a product yield of 98 wt.-% (percent by weight) of metal hexyl carbonate having the chemical formula Mg₆Al₂(O-Hex)₁₈.
An aqueous solution of ammonium carbonate (containing 54 mmol (NH₄)₂(CO₃)₂) was prepared and CO₂ gas was bubbled into the solution for a period of 4 hours. The carbon atoms of the CO₂ gas were labelled with ¹³C and thus it was possible to receive the ammonium carbonate solution with ¹³C labelled atoms.

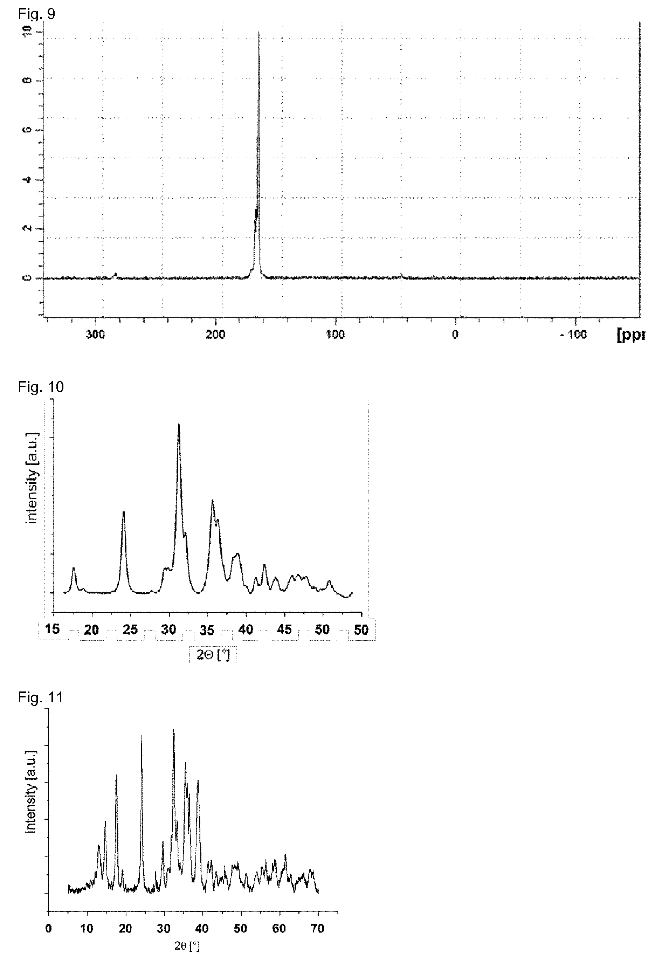

In order to trigger the hydrolysis the resulting ammonium carbonate solution containing the labelled carbon atoms was added to the metal hexanolate solution under vigorous stirring. The resulting mixture was kept under heating at 80 °C and under stirring for a time period of 5 h. The hydrolysis and aging had led to the formation of a precipitate which was filtered off from the mixture and washed. The washing comprised a first washing step with acetone and a second washing step with water. The product which had been received out of the washing process was placed in an oven at 80 °C for a time period of 12 hours for drying. The solid material was characterized by XRD shown in Figure 8 and a ¹³C MAS NMR measurement, which is shown in Figure 9. In the ¹³C MAS NMR spectrum the characteristic chemical shift for carbonates can be observed: ¹³C MAS NMR: δ 163.8-166.9 (m, CO₃). One main sharp signal for the carbonate groups is found, which confirms the presence of the carbonate anion in the interlayer. Additional carbonate signals were present. These are assigned to the carbonate groups and surface.

### Example 8 (15) - (Cu₂[(OH)₂CO₃])

6.0 g copper(II)isopropylate and 120.0 g of 2-(2-methoxyethoxy)ethanol were placed under inert gas atmosphere in a 250 mL Schlenk flask. The mixture was heated up form room temperature to 80 °C receiving a homogeneous dark green solution. In order to convert the metal alkoxides into the metal alkyl carbonate the solution was brought in contact with CO₂ by passing the CO₂ gas (volumetric flow rate: 2 L/min) into the solution over a time period of 1 h while the solution was heated at 80 °C.

In a subsequent step the solution containing the metal alkyl carbonate was subjected to a hydrolysis by adding 60 g of water. No aging process was performed after the addition of the water. The precipitate formed was filtered, dried in a circulating air oven at 80 °C overnight. The yield was 90 wt.-% (percent by weight) of the theoretical yield. Figure 10 shows the diffractogram of example 8. The powder diffractogram shows a pattern which is typical for phase pure Malachite (Cu₂[(OH)₂CO₃]) [ICSD Coll Code #30609]. The sample showed a specific surface area of 56 m²/g measured via nitrogen adsorption with the BET method.

### Example 9 (16) - (Cu_{0.75}Zn_{0.25}[(OH)₂CO₃])

3.25 g copper(II)isopropoxide, 1.13 g zinc(II)isopropoxide and 80 g of 2-(2-methoxyethoxy)-ethanol were given into a 250 mL Schlenk flask and put under inert gas atmosphere. The solution metal alkoxides which was heated up to 80 °C showed to change color to dark green. To convert the metal alkoxides into the corresponding metal alkyl carbonates the solution was brought into contact with dry CO₂ by passing the CO₂ gas into the solution. The CO₂ was passed into the solution for a time period of 1 h (using a flow rate of 2 L/min) whereby the solution was heated at 80 °C. In a subsequent step the metal alkyl carbonate solution was subjected to a hydrolysis step by adding 60 g water to the solution. The mixture was heated for 4 h at 80 °C in order to age the precipitate.

Thereafter, the precipitate was filtered off and for dried by placing it in an oven at 80 °C for 12 h (using an air circulating oven). The yield which was obtained reflected 87 wt.-% (percent by weight) of the theoretical yield. Figure 11 shows the diffractogram of example 8. The powder diffractogram shows a pattern which is typical for phase pure Zincian-Malachite (Cu_{0.75}Zn_{0.25}[(OH)₂CO₃]) [ICSD Coll Code #260813 (Cu_{0.8}Zn_{0.2})₂ (OH)₂ (CO₃)]. The sample showed a specific surface area of 81 m²/g measured via nitrogen adsorption with the BET method.

### Expample 10 (17) - (Cu_{0.61}Zn_{0.21}Al_{0.18}[(OH)ₓCO₃])

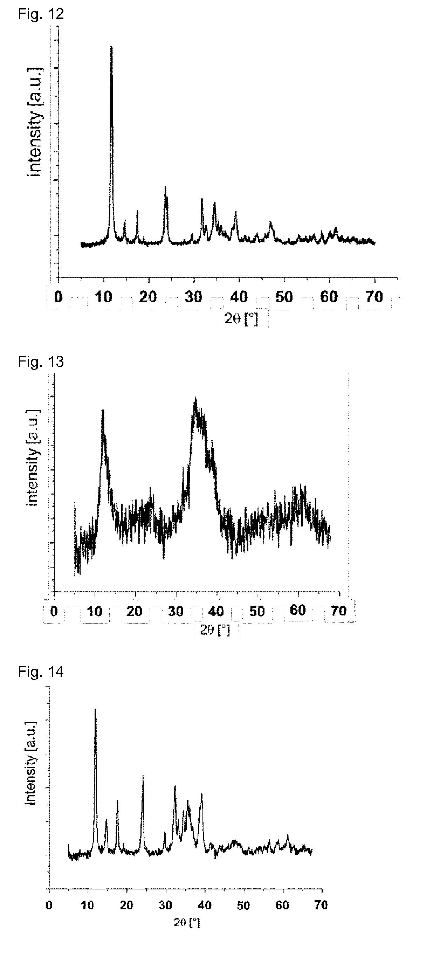

3.33 g copper(II)isopropoxide, 1.16 g zinc(II)isopropoxide and 80 g of 2-(2-Methoxyethoxy)-ethanol were given into a 250 mL Schlenk flask and put under inert gas atmosphere. The solution metal alkoxides which was heated up to 80 °C showed to change color to dark green. Then, 2.08 g aluminium(III)-2-2-methoxyethoxyethanolate were added to the copper and zinc containing solution. The resulting solution with the metal alkoxides was transferred into a 2000 mL reaction vessel. To convert the metal alkoxides into the corresponding metal alkyl carbonates the solution was brought into contact with CO₂ gas which was passed into the solution using a flow rate of 2 L/min. The CO₂ gas supply into the solution was kept up for a time period of 1 hour whereby the mixture was heated at 80 °C (this corresponded to 120 L CO₂ which is approximately 4.8 mol CO₂). The exposure to the CO₂ gas led to the formation of a metal alkyl carbonate solution. The metal alkyl carbonate solution was subjected to a hydrolysis step by adding 700 g of water to the solution. The addition of water was performed while the solution was heated at 80 °C and stirred. Aging of the solution for a defined time period was omitted. The precipitate which had been formed was filtered off directly after the performance of the hydrolysis step and dried in an oven (using a circulating air oven) at 80 °C for a time period of 12 h. The yield of the solid material was 88 wt.-% (percent by weight) of the theoretical yield. The material was calcined at 600°C for 2h in muffle furnace under dry air. The specific surface area of the calcined material was 74 m²/g. After tabletting, crushing and sieving the oxidic catalyst was reduced in 5% (v/v) hydrogen/nitrogen-mixture and tested for methanol synthesis activity. Conditions: H₂/CO ratio 3 : 1, balanced with 6% CO₂ and 10% Argon), 230 °C, 50 bar, GHSV: 2400h⁻¹. Space-time-yield: 0.57 kg MeOH L⁻¹ h⁻¹. Figure 12 shows the diffractogram of example 10. The powder diffractogram shows a pattern which is typical for CuZnAI-hydrotalcite, which is characterized by the reflexes of d003, d006 and d012 respectively, which are the main reflexes of hydrotalcite-like compounds [ICSD Coll Code #6296 (Mg₄ Al₂) (OH)₁₂ (CO₃) (H₂O)₃)_{0.5}]. Traces of a minor phase (Zincian-malachite [ICSD Coll Code #260813 (Cu_{0.8} Zn_{0.2})₂ (OH)₂ (C O₃)]) are detectable. The sample showed with a specific surface area of 227 m²/g measured via nitrogen adsorption with the BET method.

### Example 11 (18) - (Cu_{0.61}Zn_{0.21}Al_{0.18}[(OH)ₓ(CO₃)_{y}])

The process for the preparation of Example 11 was similar to the process that is described for Example 10 with the difference that the quantity of water which was added to the solution for the hydrolysis step was 3 g of instead of 700 g. The yield of solid material which was obtained by the process was 91 wt.-% (percent by weight) of the theoretical yield.
Figure 13 shows the diffractogram of example 11. The powder diffractogram shows a pattern which is typical for a poorly crystalline CuZnAl-hydrotalcite, which is characterized by the reflexes of d003, d006 and d012 respectively, which are the main reflexes of hydrotalcite-like compounds[ICSD Coll Code #6296 (Mg₄ Al₂) (OH)₁₂ (CO₃) (H₂O)₃)_{0.5}]. The sample showed with a specific surface area of 80 m²/g measured via nitrogen adsorption with the BET method.

### Example 12 (19) - (Cu_{0.61}Zn_{0.21}Al_{0.072}Ti_{0.108}[(OH)ₓ(CO₃)_{y}])

3.33 g copper(II)isopropoxide, 1.16 g zinc(II)isopropoxide and 80 g of 2-(2-methoxyethoxy)-ethanol given into a 250 mL Schlenk flask and put under inert gas atmosphere. The solution of the metal alkoxides which was heated up to 80 °C showed to change color to dark green. Then, 1.66 g aluminium(III)- and 3.4 g titanium(IV)-2-2-methoxyethoxyethanolate were added to the copper and zinc containing solution. To obtain the metal alkyl carbonates the solution with the metal alkoxides was brought into contact with CO₂ by passing CO₂ gas into the solution and by using a flow rate of 2 L/min. The supply of the CO₂ gas into the solution was kept up 1 hour whereby the solution was heated at 80 °C. The solution which contained the metal alkyl carbonate species were hydrolyzed by the adding 700 g of water to the solution. During and after the addition of water the solution was stirred and heated at 80 °C.

The precipitate which had been formed was filtered off and dried in an air circulated oven at 80 °C for a time period of 12 h. The yield of the solid material which was recovered was 84 wt.-% (percent by weight) of the theoretical yield. Figure 14 shows the diffractogram of example 12. The powder diffractogram shows a pattern which is typical for a CuZnAl-hydrotalcite, which is characterized by the reflex-es of d003, d006 and d012 respectively, which are the main reflexes of hydrotalcite-like compounds [ICSD Coll Code #6296 (Mg₄ Al₂) (OH)₁₂ (CO₃) (H₂O)₃)_{0.5}]. Minor traces of the phases Zincian-malachite [ICSD Coll Code #260813 (Cu_{0.8} Zn_{0.2})₂ (OH)₂ (CO₃)] and Copper(II)oxide [ICSD Coll Code #31059 (CuO - Tenorite)] are detectable. The sample showed with a specific surface area of 95 m²/g measured via nitrogen adsorption with the BET method.

### Example 13 (I10) - (Cu_{0.61}Zn_{0.21}Al_{0.072}Zr_{0.108}[(OH)ₓ(CO₃)_{y}])

3.33 g copper(II)isopropoxide, 1.16 g zinc(II)isopropoxide and 80 g of 2-(2-Methoxyethoxy)ethanol were placed under inert gas atmosphere in a 250 mL Schlenk flask.
The solution of the metal alkoxides which was heated up to 80 °C showed to change color to dark green. Then, 1.66 g aluminium(III)- and 3.94 g zirconium(IV)-2-2-methoxyethoxyethanolate were added to the copper and zinc containing solution. To obtain the metal alkyl carbonate the solution with the metal alkoxides was brought into contact with CO₂ by passing CO₂ gas into the solution using a flow rate of 2 L/min.

During and after the CO₂ gas was supplied to the solution the solution was heated at 80 °C and stirred. The supply of the CO₂ gas was kept up together with stirring at 80 °C for 1 h.
The CO₂ gas was passed into the solution for a time period of 1 hour whereby the mixture was The resulting metal alkyl carbonate solution was subjected to a hydrolysis step by adding 700 g of water under vigorous stirring and heating of the solution at 80 °C. After the addition of the water had been finished the aging step was omitted due to the absence of counter-ions.
The precipitate which had been formed was filtered off and dried circulating air oven at 80 °C for a time period of 12 h. The yield of the solid material which could be recovered was 87 wt.-% (percent by weight) of the theoretical yield.

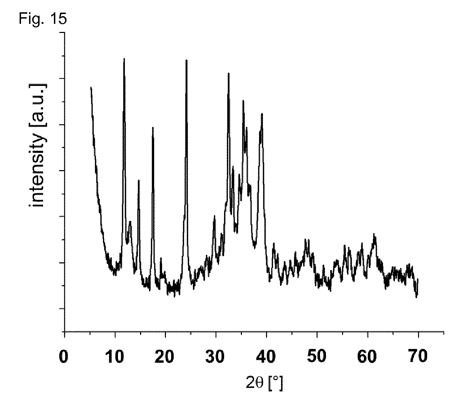

The material was calcined at 600 °C for 2 h in muffle furnace under dry air. The specific surface area of the calcined material was 74 m²/g. After tabletting, crushing and sieving the oxidic catalyst was reduced in 5 vol.-% (percent by volume) hydrogen in a mixture of hydrogen and nitrogen and subjected to catalytic test by exposing the catalyst to methanol synthesis conditions in order to assess its activity. The testing conditions were as follows: H₂/CO ratio 3:1, balanced with 6 % CO₂ and 10 % Argon, 230 °C, 50 bar, GHSV: 2400 h⁻¹. Space-time-yield: 0.86 kg MeOH L⁻¹ h⁻¹. Figure 15 shows the diffractogram of example 13. The powder diffractogram shows a pattern which is typical for a CuZnAl-hydrotalcite, which is characterized by the reflex-es of d003, d006 and d012 respectively, which are the main reflexes of hydrotalcite-like compounds [ICSD Coll Code #6296 (Mg₄ Al₂) (O H)₁₂ (CO₃) (H₂O)₃)_{0.5}]. Minor traces of the phases Zincian-malachite [ICSD Coll Code #260813 (Cu_{0.8} Zn_{0.2})₂ (OH)₂ (CO₃)] and Copper(II)oxide [ICSD Coll Code #31059 (CuO - Tenorite)] are detectable. The sample showed with a specific surface area of 229 m²/g measured via nitrogen adsorption with the BET method is obtained.

### Example 14 (CE4)

Impregnation of 5 wt.-% (percent by weight) Cu on a SiO₂ support via using a soluble alkoxides. 0.57g copper(II)isopropoxide, and 6 g of 2-(2-Methoxyethoxy)ethanol were given into a 10 mL Schlenk tube and under inert gas atmosphere. The mixture was heated up to 80 °C and changed its color to dark green. The resulting solution containing the cupper(II)isopropoxide was used to impregnated 4 g of a highly-porous SiO₂ carrier (Cariact Q20C from supplier Fuji Silysia Chemical, Ltd., average pore size 20 nm, pore volume 0.8 ml/g, surface area 140 m²/g, particle size 1.18-2.36 mm). The solvent was evaporated and the catalyst was dried under inert gas atmosphere. Then the catalyst was calcined in a muffle furnace under CDA (250 ° C/1h and 400 °C/1h). Determination of Cu-dispersion by N₂O selective oxidation resulted 9.9 % and 4.2 % respectively. The method of determining the N₂O selective oxidation is based on the first step of reducing the catalyst sample in hydrogen atmosphere followed by a second step of oxidizing the example in the presence N₂O which leads to the formation of CuO and N₂. The oxidation rate indicates the Cu activity on the surface of the sample and the higher Cu activity is connected to a better dispersion of Cu and / or higher Cu content.

### Example 15 (I11)

Impregnation of 5 wt.-% (percent by weight) Cu on a SiO₂ support via soluble metal alkyl carbonates. 0.57g copper(II)isopropoxide, and 6 g of 2-(2-methoxyethoxy)ethanol were given into a 10 mL Schlenk tube and put under inert gas atmosphere. The solution was heated up to 80 °C. The solution changed its color to dark green. To obtain the metal alkyl carbonate the solution was contacted with CO₂ by passing CO₂ gas into the solution using a flow rate of 2 L/min. The supply of the CO₂ gas into the solution was kept up for 1 h. The mixture was stirred and heated at 80 °C. The resulting solution containing the metal alkyl carbonate was used for the impregnation of a highly-porous SiO₂ carrier (Cariact Q20C from supplier Fuji Silysia Chemical, Ltd., average pore size 20 nm, pore volume 0.8 ml/g, surface area 140 m²/g, particle size 1.18-2.36 mm). The 4 g of the porous SiO₂ carrier were immersed with the solution. The solvent was evaporated and the impregnated carrier was dried and then calcined under inert gas atmosphere in muffle furnace under CDA (250 °C/h and 400 °C/h).
The efficiency of the copper dispersion was tested by the determination of the N₂O selective oxidation activity of the catalyst. The test resulted N₂O selective oxidation activities of 16.4 % and 8.1 % respectively.

### Example 16 (112)

5 wt.-% (percent by weight) Cu on SiO₂ support via soluble metal alkyl carbonates
0.57g copper(II)isopropoxide, and 8 g of 2-propanol were placed under inert gas atmosphere in a 10 mL Schlenk tube. It is noted that Example 16 is based on the use of propanol as solvent whereas Example 15 is based on the use of 2-(2-methoxyethoxy)ethanol. The suspension was brought into contact with dry CO₂ by bubbling through the gas (volumetric flow rate: 2 L/min). The CO₂ gas was passed into the solution for a time period of 4 hours. The exposure to the CO₂ gas led to the formation of a metal alkyl carbonate solution. The solution was impregnated on 4 g of highly-porous SiO₂ carrier (as in example 15). After drying under inert gas atmosphere calcination was performed in muffle furnace under dry air (250°C/1h and 400°C/1h). In all cases in which dry air was employed the dry air was free of impurities. Determination of Cu-dispersion by N₂O selective oxidation resulted 11.0 % and 6.2 % respectively.

**Table 1 shows an overview over the experimental examples which had been prepared and their corresponding molar compositions. For the Examples 1 to 5 as well as for Example 7 magnesium ethanolate and aluminium isopropylate were used as metal salt sources. The metal salt source in Example 6 was based on aluminum magnesium isopropoxide (MgAl₂(O-iPr)₈). The metal salts in Examples 8 - 11 were based on cupper isopropylate (Cu(O-iPr)₂), zinc isopropylate (Zn(O-iPr)₂) and aluminium 2-2-methoxyethoxyetanolate. In case of Examples 3 - 5 an amount of 1.61 mol of methanol was added to the solution as co-solvent. The solvent which was used in Examples 8 - 11 was 2-(2-metoxyethoxy)ethanol marked with a star *. The symbol # indicates that a given amount of about 5 L labelled CO₂ gas was circulated.**

| Example | Composition | Mg: Al in [mmol] | cation valency in [mmol] | metals content [mmol] | hexanol [mmol] | H₂O [mol] | CO₂ deliver | Characterization |
|---|---|---|---|---|---|---|---|---|
| Ex. 1 | Mg₆Al₂(O-Hex)₁₈ | 108.6 : 36.2 | 325.8 | 144.8 | 146.8 | / | / | IR (Fig. 1) |
| Ex. 2 (I1) | Mg₆Al₂(OOCO-Hex)₁₈ | 108.6 : 36.2 | 325.8 | 144.8 | 146.8 | / | 4.9 mol | IR (Fig. 2a, b) |
| Ex. 3 (CE1) | Mg₆Al₂(OH)₁₈.4 H₂O | 108.6 : 36.2 | 325.8 | 144.8 | 529.7 | 1.722 | / | XRD (Fig. 3 top) TEM (Fig. 4a) |
| Ex. 4 (I2) | Mg₆Al₂(CO₃)(OH)₁₆.4 H₂O | 108.6 : 36.2 | 325.8 | 144.8 | 529.7 | 1.722 | / | XRD (Fig 3, bottom) TEM (Fig. 4b) |
| Ex. 5 (I3) | Mg₆Al₂(¹³CO₃)(OH)₁₆.4 H₂O | 108.6 : 36.2 | 325.8 | 144.8 | 146.8 | 1.722 | # | solid state NMR (Fig. 5) |
| | | | | | | | | |
| Ex. 6 (I4) | MgAl₂(00¹³CO-iPr)₈ | 5.4 : 10.89 | 43.47 | | 282 DMSO | / | # | ¹H I. NMR (Fig. 6); ¹³C I. NMR (Fig. 7) |
| Ex. 7 (CE3) | Mg₆Al2(¹³CO₃)(OH)₁₆.4 H₂O | 108.6 : 36.2 | 325.8 | 146.8 | | 27.78 | # | XRD (Fig. 8); 13C solid NMR (Fig. 9) |
| | | | | | | | | |
| | | Cu : Zn : Al in [mmol] | | | | | | |
| Ex. 8 (I5) | Cu₂[(OH)₂CO₃] | 33:0:0 | 33 | 33 | 1 mol * | 3.33 | 4.9 mol | XRD (Fig. 10) |
| Ex. 9 (I6) | CU_{0.75}Zn_{0.25}[(OH)ₓ(CO₃)_{y}] | 17.9 : 6.15 : 0 | 48.1 | 24.05 | 0.67 mol * | 3.33 | 4.9 mol | XRD (Fig. 11) |
| Ex. 10 (I7) | Cu_{0.61}Zn_{0.21}Al_{0.18}[(OH)ₓ(C O₃)_{y}] | 17.9 : 6.15 : 5.38 | 65.59 | 29.43 | 0.67 mol * | 38.89 | 4.9 mol | XRD (Fig. 12) |
| Ex. 11 (I8) | Cu_{0.61}Zn_{0.21}Al_{0.18}[(OH)ₓ(C O₃)_{y}] | 17.9 : 6.15 : 5.38 | 65.59 | 29.43 | 0.67 mol * | 0.167 | 4.9 mol | XRD (Fig. 13) |
| | | Cu : Zn : Al : Ti in [mmol] | | | Diethylenglycol | H₂O [mol] | | |
| Ex. 12 (I9) | Cu_{0.61}Zn_{0.21}Al_{0.072}Ti_{0.108}[(O H)ₓ(CO₃)_{y}] | 27.2 : 9.32 : 4.29 : 6.43 | 111.63 | 47.24 | 0.67 mol | 38.89 | 4.9 mol | XRD (Fig. 14) |
| | | | | | | | | |
| | | Cu : Zn : Al : Zr in [mmol] | | | Diethylenglycol | | | |
| Ex. 13 (I10) | Cu_{0.61}Zn_{0.21}Al_{0.072}Zr_{0.108}[(O H)ₓ(CO₃)_{y}] | 27.2 : 9.32 : 4.29 : 6.86 | 113.35 | 47.67 | 0.67 mol | 38.89 | 4.9 mol | XRD (Fig. 15) |
| | | Cu : Si in [mmol] | | | | | | |
| Ex. 14 (CE 4) | Cu on SiO₂ | 4.65 : 66.57 | 9.3 | | 49.9 mmol | | | |
| Ex. 15 (I11) | Cu on SiO₂ | 4.65 : 66.57 | 9.3 | | 49.9 mmol | | 4.9 mol | |

### Brief description of the Figures

- Fig. 1: shows the infrared spectrum which had been obtained by the characterization of the liquid solution of the metal hexanolate (i.e. Mg₆Al₂(O-Hex)₁₈) which had been obtained in Example 1. Hex refers to a hexyl group.
- Fig. 2a, b: shows the infrared spectrum which had been obtained by the characterization of the metal hexyl carbonate solution (i.e. Mg₆Al₂(OOCO-Hex)₁₈ in hexanol) which had been obtained in Example 2. (Fig. 2.a shows data for the wavenumbers from 1900 - 460 cm⁻¹, Fig. 2b shows data for the wavenumbers from 3600 - 2500 cm⁻¹.)
- Fig. 3: shows the diffractograms which were obtained by the XRD characterization of Example 3 [the diffractogram in the upper part of the Fig. 3] and 4 [the diffractogram at the bottom of Fig. 3], Mg₆Al₂(OH)₁₈.4H₂O [the diffractogram in the upper part] and Mg₆Al₂(CO₃)(OH)₁₆.4H₂O [bottom part of Fig. 3] hydrotalcites.
- Fig. 4: ashows a TEM picture which had been obtained by the characterization of Example 3, i.e. the Mg₆Al₂(OH)₁₈.4H₂O hydrotalcites.
- Fig. 4b: shows a TEM picture which had been obtained by the characterization of Example 4, i.e. the Mg₆Al₂(CO₃)(OH)₁₆.4H₂O hydrotalcites.
- Fig. 5: shows the CP / MAS ¹³C NMR spectrum was obtained for Example 5, i.e. Mg₆Al₂(¹³CO₃)(OH)₁₆.4 H₂O.
- Fig. 6: shows the ¹H NMR spectrum which was obtained for Example 6, i.e. MgAl₂(OO-COiPr)₈ in d₆-DMSO. Pr refers to a propyl group.
- Fig. 7: shows the ¹³C NMR spectrum was obtained for Example 6, i.e. MgAl₂(OOCOiPr)₈ in d6-DMSO.
- Fig. 8: shows the diffractogram which was obtained by the XRD characterization of Example 7.
- Fig. 9: shows the CP / MAS ¹³C NMR spectrum was obtained for Example 7, Mg₆Al₂(¹³CO₃)(OH)₁₆.4 H₂O (hydrolyzed with water solution of ammonium carbonate solution).
- Fig. 10: shows the diffractogram, which was obtained by the XRD characterization of Example 8. Phase pure Malachite (Cu₂[(OH)₂CO₃]) is obtained.
- Fig. 11: shows the diffractogram, which was obtained by the XRD characterization of Example 9. Phase pure Zinc-Malachite (Cu_{0.75}Zn_{0.25}[(OH)₂CO)₃]) is obtained.
- Fig. 12: shows the diffractogram, which was obtained by the XRD characterization of Example 10. Main phase is a CuZnAl-hydrotalcite. Traces of a minor phase (Zincianmalachite) are detectable.
- Fig. 13: shows the diffractogram, which was obtained by the XRD characterization of Example 11. Main phase is a poorly crystalline CuZnAl-hydrotalcite.
- Fig. 14: shows the diffractogram, which was obtained by the XRD characterization of Example 12. Main phase is a CuZnAl-hydrotalcite. Traces minor phases Zincian-malachite and Copper(II)oxide are detectable.
- Fig. 15: shows the diffractogram, which was obtained by the XRD characterization of Example 13. Main phase is a CuZnAl-hydrotalcite. Traces minor phases Zincian-malachite and Copper(II)oxide are detectable.

The main results which were derived from the infrared spectra are given in Table 2.

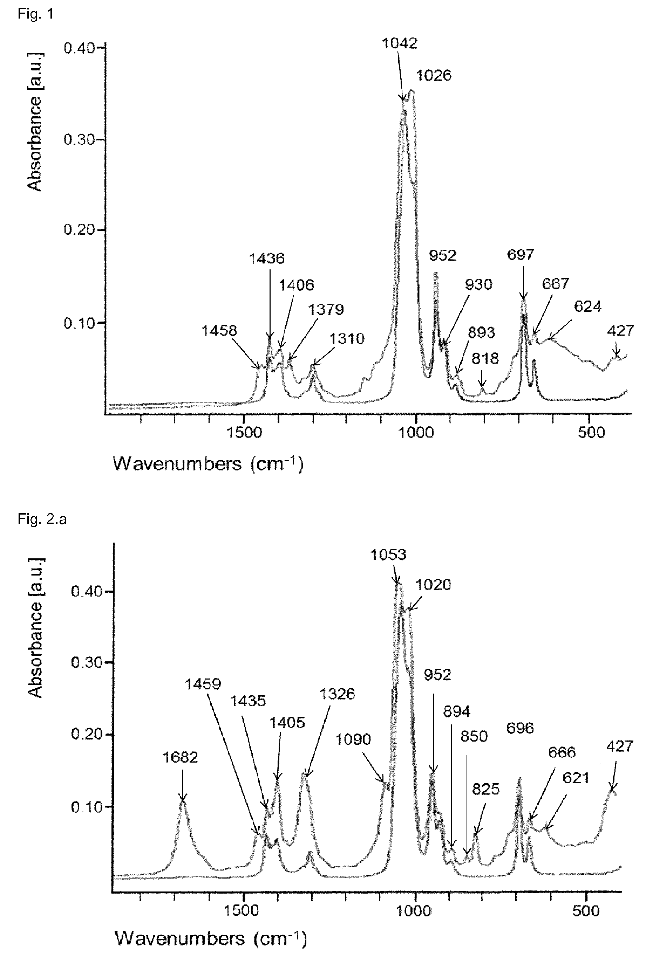

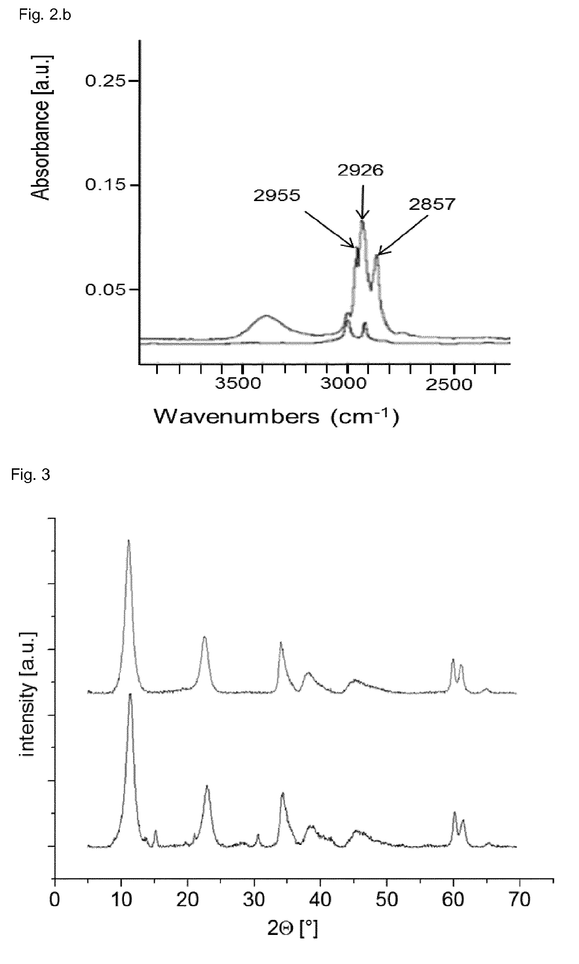

Figure 2 shows an infrared spectra which was obtained for mixed metal hexyl carbonate of Example 2 with the formula Mg₆Al₂(OOCO-Hex)₁₈. For comparison reasons the infrared spectra were also determined on the metal hexylate sample (i.e. the Mg₆Al₂(O-Hex)₈) which had been prepared in Example 1.

The metal solutions in Example 1 and Example 2 had gelatinous properties and for the preparation of the IR measurements the samples were diluted with DMSO. The IR measurements were carried out by using an ATR cell.

The IR-spectrum (given in Figures 2a, b) on the sample Mg₆Al₂(OOCO-Hex)₁₈ showed to exhibit an absoption band with a peak at the wavenumber of 1682 cm⁻¹ wich is attributable to C=O bond stretching and several peaks at wavenumber of 1326 cm⁻¹, 1405 cm⁻¹ 1435 cm⁻¹ and 1459 cm⁻¹ that are associated with C-O bond stretching. Although there are peaks at similar wavelengths present in the Mg₆Al₂(O-Hex)₁₈ precursor (Figure 1), the peaks are not of high intensity unlike in the Mg₆Al₂(OCOO-Hex)₁₈ precursor. These peaks are attributed to C-H bond bending. Thus, there is an overlap between the peaks caused by C-H bend and C-O stretch in Mg₆Al₂(OCOO-Hex)₁₈ and the exact peaks caused by different types of bond stretching and bending cannot be distinguished from each other. All peaks and their respective association bands observed in other regions are listed in Table 2.

**Table 2 gives a summary of the frequency peaks of the infrared bands which were detected by the characterisation of Example 1 and 2 and which were attributed to characteristic vibration frequencies of the constituents of the samples.**

| Example 1 Mg₆Al₂(O-Hex)₈ [cm⁻¹] | Example 2 Mg₆Al₂(OOCO-Hex)₆ [cm⁻¹] | DMSO [cm⁻¹] | Assignment of the vibration bands |
|---|---|---|---|
| 427 | 427 | - | O-Mg-O/O-Al-O lattice vibrations |
| 624, 667 | 621,666 | - | Al-OH/Mg-OH stretch |
| - | - | 696 | C-S-C stretch |
| - | - | 1020 - 1042 | S=O stretch |
| 1310-1458 | 1326 - 1459 | bands are present, but clouded by I R bands of the precursors | C-O stretch and C-H bend (in the case of DMSO, only C-H bend) |
| - | 1682 | - | C=O stretch |
| 2858,2927,2957 | 2857, 2926, 2955 | - | C-H stretch |
| 3390 | 3390 | - | O-H stretch |

**Table 3 shows a summary of the BET and XRD data which were obtained by the characterization of Examples 3 and 4. Example 3 had the stoichiometric formula Mg₆Al₂(OH)₁₈.4H₂O and Example 4 has the stoichiometric forumula (Mg₆Al₂(CO₃)(OH)₁₆.4H₂O).**

| | Mg₆Al₂(OH)₁₈.4H₂O | Mg₆Al₂(CO₃)(OH)₁₆.4H₂O |
|---|---|---|
| Specific surface area [m²/g] | 147.3 | 143.35 |
| Crystallite size along d₀₀₃ plane[nm] | 6.284 | 6.084 |
| Lattice parameters [Å] | a = 3.09907; c = 23.50607 | a = 3.08585; c = 23.16356 |

Figure 3 shows the diffractograms of hydrotalcites whereby the main phases of hydrotalcites ( Î±) are characterised by the reflexes of d₀₀₃, d₀₀₆ and d₀₁₂ respectively. (003) indicates the lattice plane where the metal ions layer are, thus d₀₀₃ indicates the distance between each brucite-like metal layers, i.e. the size of interlayer. In order to determine the crystal size of the samples the evaluation was focused on the analysis of the d₀₀₃ lattice plane (see Figure 3). The sharpness of the reflexes indicate the crystallite size of the lattice plane corresponding to the Miller index. Any distortion of the lattice plane due to presence of amorphous structure are indicated by peaks that are wide and are of low intensity. The comparison of the XRD data which were obtained for the materials of Example 3 (i.e. the Mg₆Al₂(OH)₁₈.4H₂O) and Example 4 (i.e. the Mg₆Al₂(CO₃)(OH)₁₆.4H₂O) gave that both samples possess more or less the same structure with some minor differences. These minor differences were that the phases which were formed in case of Example 4 (i.e. Mg₆Al₂(CO₃)(OH)₁₆.4H₂O) showed small amounts of böhmite and an aluminium hydroxide oxide mineral (γ-AlO(OH)).
The TEM image which is shown in Fig. 4.a illustrates the particle morphology of the solid material which was obtained by the CO₂ free synthesis system in Example 3 as comparison example CE. The synthesis in Example 3 was characterized by a process which was based on a hydrolysis process in connection with a solution which contained high boiling alcohol with methanol as co-solvent. It had been found out previously that the synthesis system would result in the formation of very thin particles with an anisotropic shape. The particles have a length which is 50 nm or less and a thickness which is less than 10 nm. Fig. 4.b shows a TEM image the particles which were obtained in Example 4 and which illustrate the particles obtained according to the process of the present invention by using the metal alkyl carbonate for the precipitation process. The shape of the particles appears to be less pronounced with respect to the anisotropic character. It is noted that the sample in Figure 4.b is somewhat thicker than the sample in Figure 4.a. The small particles which are present in sample appear to have grown together in different regions. There are small needle like structures visible. The surfaces of the particles in Fig 4.b appear to be more crumpled over the particles which are observed in Fig. 4.a.

The metal alkyl carbonate solution which had been prepared in Example 6 in accordance with the invention was subjected to a NMR analysis by ¹H-NMR and ¹³C-NMR. In order to increase the signal intensity for the NMR-analysis the CO₂ insertion had been performed with ¹³C labelled carbon atoms. The NMR data of the ¹H-NMR as well as of the ¹³C-NMR clearly indicated that the CO₂ molecules had been inserted into the structure of the metal alkoxides.

Furthermore the precipitated solids which were obtained in Example 7 were subjected to a solid state ¹³C-NMR-analysis (Figure 9). The synthesis of Example 7 was based on a precipitation in the presence of ammonium carbonate solution. The NMR data indicated that the carbonate species were in the structure of the solid.

XRD data in Figure 3 give a comparison between the inventive Example 4 and the Example 3 which is not based on the invention. The finding was that both synthesis methods had led to the formation of a material which has a hydrotalcite structure. The small differences are related to the insertion of carbonate species inside the structure of Example 4.

XRD data in Figures 9 to 12 showed structures of solid materials which contained carbonate. Consequently these data were illustrating that the carbonate was inserted in the structure of the solid products which were obtained by the hydrolysis in connection with the solutions comprising the metal alkyl carbonates.

In addition, the amount of inserted CO₂ was determined with an experiment with unsoluble copper isopropoxide Cu(OiPr)₂, in which CO₂ was inserted to full solubilisation and formation of Cu(OOCOiPr)₂. The Cu(OOCOiPr)₂ solution was then treated with flow of argon, which leads to release of CO₂ and precipitation of the copper isopropoxide Cu(OiPr)₂. The released CO₂ was captured and added to a solution of barium hydroxide Ba(OH)₂ leading to formation of barium carbonate BaCO₃ and water. From the mass of dry isolated BaCO₃ it could be confirmed that CO₂ inserts quantitative in the metal-oxygen bonds of the metal alkoxide.

### Characterization methods and equipment

Methods and equipment which were used for the characterization of the materials are detailed hereafter. All samples were analyzed by powder XRD in order to determine the crystal structure and crystallite size and with N₂-Physisorption for determining the specific surface are of the particles.

The determination of the BET surface area was performed with a TriStar II 3020 from Micromeritics with a conditioning step of 150 ° C and the XRD measurements were performed with a Bruker D9 C2 Discover XRD.

The information about the morphology and size of the particles were determined, using a transmission electron microscopy. The TEM measurements were based on an instrument which was Tecnai G20 from the company FEI with 200kV or similar.

The drying oven that was employed was a circulating air oven from the company Binder (model number FD-115). Typically the samples were dried at 80 °C for 24 h. Freeze-drying: For the freeze-drying, an equipment from the company Christ had been used (the model which was deployed was an Alpha 1-4). The samples were frozen to - 30° C and at -10 ° C and dried at 2.56 mbar for 24 h. Rotary evaporator: The evaporation experiments were performed with a rotary evaporator from the company Heidolph using the model Laborota 4001. The samples were dried at 80 °C, under reduced pressure of 100 mbar and 120 min⁻¹ for 24 h.

¹H, and ¹³C NMR spectra were recorded on Bruker Advance 500, MHz spectrometer and were referenced to the residual proton (¹H) or carbon (¹³C) resonance peaks of the solvent. Chemical shifts (δ) are reported in ppm.

¹³C solid-state NMR spectra were recorded using a Bruker Advance-III 400 spectrometer with ¹³C resonance frequency 100.6 MHz, with a 4 mm magic-angle spinning probe spinning at ≥10kHz, 5µs 90° single-pulse excitation, heteronuclear high-power proton decoupling during acquisition, and at least 16 scans using a recycle delay of ≥ 120 seconds.

Spectra were processed with exponential line broadening and manual baseline correction. The infrared spectra were taken by using the IR spectrometer (Bruker Type ALPHA FT-IR-Spectrometer) with an ATR-sample cell.

## Claims

1. Metal alkoxide solution comprising metal alkyl carbonate groups of at least one metal species having the formula M_{X}[OR₁]_{Y}[OOCOR₂]_{Z} in which
M_{X} denotes at least one metal from the group M(I)_{A}, M(II)_{B}, M(III)_{C}, M(IV)_{D,} M(V)_{E}, M(VI)_{F}, M(VII)_{G}, [OOCO] denotes a carbonate group, R₁, R₂ denote alkyl groups with C1 - C60 carbon atoms with X = A+B+C+D+E+F+G and Y + Z = A+2*B+3*C+4*D+5*E+6*F+7*G, whereby the solution has a water content which is less than 10 ‰ with respect to the molar amount of base molecules, whereby the base molecules comprise at least the metal alkoxides;
in case that the metal species only contains a monovalent metal then the solution is formed by metal alkoxide and metal alkyl carbonate whereby the molar amount of metal alkyl carbonate to molar amount of metal alkoxide ≥ 1 : 1;
in all other cases the molar amount of the metal alkyl carbonate groups Z, preferably of the metal alkyl carbonate groups, in comparison to the total molar amount of organic carbonate groups, preferably alkyl carbonate groups and alkoxide groups, (Y + Z) is in the range from 0.01 - 1.

2. Metal alkoxide solution comprising metal alkyl carbonate groups according to claim 1 whereby the solution comprises at least one alcohol from C1 - C60 alcohol as solvent.

3. Metal alkoxide solution comprising metal alkyl carbonate groups according to claim 1 or claim 2 whereby the molar amount of metals to the molar amount of solvent is in the range from 0.01 : 1 - 10 : 1.

4. Metal alkoxide solution comprising metal alkyl carbonate groups according to one of the claims 1 - 3 whereby the solution comprises organic polymers, co-solvent and/or stabilizers.

5. Metal alkoxide solution comprising metal alkyl carbonate groups according to one of the claims 1 - 4 whereby metal species is selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc, Y, Zr, Ti, Hf, Cr.

6. Metal alkoxide solution comprising metal alkyl carbonate groups according to one of the claims 1 - 5 whereby the solution comprises at least one noble metal selected from the group Rh, Ir, Pd, Pt, Ag, Au.

7. Metal alkoxide solution comprising metal alkyl carbonate groups according to one of the claims 1 - 6 whereby the solution comprises at least one noble metal selected from the group Rh, Ir, Pd, Pt, Ag, Au and at least one none noble metal selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr, whereby it is preferred that the molar amount of noble metal to molar amount of none noble metal is in the range from 0.01 : 1 to 10 : 1.

8. Process for the preparation of a metal alkoxide solution comprising metal alkyl carbonate groups whereby the process involves the step:
a) preparation of a metal alkoxide solution which has a water content which is less than 10 ‰ with respect to the molar amount of base molecules, whereby the base molecules comprise at least the metal alkoxides, whereby the metal alkoxide comprises at least one metal alkoxide having the formula M_{X}[OR₁]_{Y} in which Mx denotes at least one metal from the group M(I)_{A}, M(II)_{B}, M(III)_{C}, M(IV)_{D,} M(V)_{E}, M(VI)_{F}, M(VII)_{G}, and R₁ denotes an alkyl group with C1 - C60 carbon atoms with X = A+B+C+D+E+F+G and Y = A+2*B+3*C+4*D+5*E+6*F+7*G,
b) contacting the metal alkoxide solution with CO₂ whereby the contacting involves thorough mixing of the solution in the presence of CO₂ for a defined period of time at a defined temperature.

9. Process for the preparation of a metal alkoxide solution comprising metal alkyl carbonate groups according to claim 8 whereby the step b) takes place at a temperature in the range from 0 - 100 °C and/or the time period for the conversion metal alkoxide is ≥ 1 min.

10. Process for the preparation of a metal alkoxide solution comprising metal alkyl carbonate groups according to claim 8 or claim 9 whereby the process is **characterized in that** the metal alkoxide comprises a metal which is selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr.

11. Process for the preparation of a metal alkoxide solution comprising metal alkyl carbonate groups according to one of the claims 8 - 10 whereby the molar amount of metals to the molar amount of solvent is in the range from 0.01 : 1 - 10 : 1.

12. Process for the preparation of a metal alkoxide solution according to one of the claims 8 - 11 which comprises at least one noble metal selected from the group Rh, Ir, Pd, Pt, Ag, Au.

13. Process for the preparation of a metal alkoxide solution according to one of the claims 8 - 12 which comprises at least one noble metal selected from the group Rh, Ir, Pd, Pt, Ag, Au and at least one none noble metal selected from the group Li, Na, K, Mg, Ca, Sr, Ba, Zn, Cd, Cu, Ni, Co, Mn, Be, Zr, Fe, Al, Ga, In, Fe, Co, Mn, Cr, La, Pr, Ce, Nd, Sm, Gd, Dy, Ho, Er, Yb, Lu, Sc,Y, Zr, Ti, Hf, Cr.

14. Process for the preparation of oxides, oxide-hydroxides, hydroxides, hydroxy-carbonates, oxy-hydroxy-carbonates, oxy-carbonates, carbonate-based materials and/or carbonate-based layered double hydroxide materials whereby a metal solution according to one of the claims 1 - 7 and/or a metal salt solution prepared by a process according to one of the claims 8 - 13 is subjected to a hydrolysis step in which the metal solution comprising metal alkyl carbonate groups is contacted with water or an aqueous liquid whereby the molar amount of water which is added to the molar amount of metals in the metal containing solution is in the range from 0.01 : 1 to 2000 : 1.

15. Oxides, oxide-hydroxides, hydroxides, hydroxy-carbonates, oxy-hydroxy-carbonates, oxy-carbonates, carbonate-based materials and/or carbonate-based layered double hydroxide materials which are prepared according to one for the claims process according to claim 14 whereby the materials are characterized the BET-surface area of the materials ≧ 10 m²/g preferably the BET-surface area is ≥ 50 m²/g, more preferably the BET-surface area is ≧ 100 m²/g and/or the average particle size is < 1000 nm, preferably the average particle size is < 100 nm.
